# EUROPEAN PATENT APPLICATION

(11) **EP 4 797 773 A1**
(43) Date of publication of application: **26.08.2026**
(21) Application number: 24888029.6
(22) Date of filing: 07.11.2024
(51) Int. Cl.: H04W 24/02

(54) **COMMUNICATION METHOD AND COMMUNICATION APPARATUS**

(30) Priority: 08.11.2023 CN 202311492781
(71) Applicant: HUAWEI TECHNOLOGIES CO., LTD., Shenzhen 518129 (CN)
(72) Inventor: XING, Weijun, Shenzhen, Guangdong 518129 (CN); XUE, Yifei, Shenzhen, Guangdong 518129 (CN); WU, Shaoyun, Shenzhen, Guangdong 518129 (CN); YAO, Qi, Shenzhen, Guangdong 518129 (CN)
(74) Representative: Isarpatent
(86) International application number: PCT/CN2024/130367
(87) International publication number: WO 2025/098418

(57) **Abstract**

A communication method and a communication apparatus are provided. The method includes: receiving a service request message; obtaining an execution method for a first service; and executing the first service based on the execution method. The service request message is used to request execution of the first service, and the execution method for the first service includes a network service to be invoked for executing the first service and invocation logic for the network service. In the technical solutions of this application, registration and management of the first service are implemented based on a design concept of a dynamic network function, thereby enabling flexible and lightweight network deployment and management.

## Description

This application claims priority to Chinese Patent Application No. 202311492781.6, filed with the China National Intellectual Property Administration on November 8, 2023 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

Currently, the 5th generation (5th generation, 5G) mobile communication network architecture is designed based on independent network elements (or network functions (network functions, NFs)). To provide a network service for a specific use case, an interaction procedure involving multiple network elements must be defined. In addition, to provide a network service externally, the network is required to deploy all network elements in advance to respond to different service requests.

For example, when establishing a session for a terminal device (for example, user equipment (user equipment, UE)), a session management function (session management function, SMF) needs to first obtain user subscription data from a unified data management (unified data management, UDM) function, then obtain a session policy and other information from a policy control function (policy control function, PCF), and control a user plane function (user plane function, UPF) to forward a user plane data packet for the UE. That is, the SMF needs to determine its next action based on the current service status, with the execution logic predefined and standardized within the NF, greatly limiting functions of the SMF.

The existing network architecture has complex logic, requires tight coupling between network functions, and has fixed invocation logic. Consequently, upgrading or updating network functions involves lengthy cycles, hindering flexible and lightweight network deployment and management.

### SUMMARY

This application provides a communication method and a communication apparatus to enable flexible and lightweight network deployment and management.

According to a first aspect, a communication method is provided. The method may be performed by a first network element, or may be performed by a chip or a circuit of a first network element. This is not limited in this application. For ease of description, the following provides descriptions by using an example in which the method is performed by the first network element.

The method includes: determining an execution method for a first service, where the execution method for the first service includes a network service to be invoked for executing the first service and invocation logic for the network service; and sending the execution method to a third network element, where the third network element supports the first service.

For example, the first network element may be a service management function, and the third network element may be a service control function.

According to the solution provided in this application, the first network element may provide the execution method for the first service to the third network element, or the first network element may orchestrate the network service to be invoked for executing the first service, so that the third network element can execute the first service on demand, thereby reducing management complexity in a network operation and maintenance process, and ensuring flexible and lightweight network deployment and management.

In some implementations of the first aspect, before sending the execution method to the third network element, the method further includes: receiving a first query message from the third network element, where the first query message is used to obtain the execution method for the first service, and the first query message includes an identifier of the first service.

Based on the method, the first network element may feed back the execution method for the first service to the third network element based on a query request from the third network element.

In some implementations of the first aspect, configuration information is sent to a second network element, where the configuration information includes the identifier of the first service, and the configuration information indicates a trigger condition for executing the first service.

For example, the second network element may be a gateway.

Based on the method, the first network element supports configuration of the trigger condition for executing the first service for the second network element. Therefore, the second network element may trigger execution of the first service when the trigger condition of the first service is met, that is, the second network element triggers initiation of a service request for executing the first service to the third network element, to trigger execution of the first service on demand, thereby improving network resource utilization.

In some implementations of the first aspect, a registration request message is received, where the registration request message is used to request to register the first service, and the registration request message includes the identifier of the first service; and a registration response message is sent, where the registration response message indicates a registration result of the first service.

Based on the solution, the first network element supports providing a registration and management service of a network function or a network service for the first service, and service-oriented network service lifecycle management is provided based on a design idea of a dynamic network function, thereby improving network resource utilization.

In some implementations of the first aspect, the registration request message further includes information about the third network element, and the method further includes: storing a correspondence between the information about the third network element and the first service.

Based on the solution, third network elements corresponding to different network services may be determined by using the correspondence between the information about the third network element and the first service, so that the third network element supports providing different levels of network services, and can provide a network service on demand, thereby ensuring flexible and lightweight network deployment and management.

In some implementations of the first aspect, a second query message from the second network element is received, where the second query message is used to obtain the information about the third network element, and the second query message includes the identifier of the first service; and the information about the third network element is sent to the second network element based on the stored correspondence between the information about the third network element and the first service.

Based on the solution, the first network element may feed back address information of the third network element to the second network element based on a query request from the second network element, so that the second network element triggers sending of a service request for executing the first service to the third network element based on the address information of the third network element.

In some implementations of the first aspect, a notification message from the third network element is received, where the notification message includes the identifier of the first service, and the notification message is used to generate context information of the first service; and the context information of the first service is generated; or context information of the first service from the third network element is received.

Based on the solution, in a process of executing the first service, the first network element and/or the third network element may generate and maintain the context information of the first service, to manage and control the first service in a current network.

According to a second aspect, a communication method is provided. The method may be performed by a second network element, or may be performed by a chip or a circuit of a second network element. This is not limited in this application. For ease of description, the following provides descriptions by using an example in which the method is performed by the second network element.

The method includes: receiving a first service request message, where the first service request message is used to request to execute a first service, and the first service request message includes an identifier of the first service; and sending a second service request message to a third network element, where the second service request message is used to request to execute the first service, and the third network element supports the first service.

For example, the second network element may be a gateway.

According to the solution provided in this application, the second network element supports a routing function, that is, may forward a service request message from a service requester to the third network element, so that the third network element can provide the first service on demand, thereby reducing management complexity in a network operation and maintenance process, and ensuring flexible and lightweight network deployment and management.

In some implementations of the second aspect, configuration information from a first network element is received, where the configuration information indicates a trigger condition of the first service, the configuration information includes the identifier of the first service, and the first network element supports management of the first service; and sending the second service request message to the third network element includes: sending the second service request message to the third network element when the trigger condition of the first service is met.

Based on the solution, the second network element may trigger, when the trigger condition of the first service is met, a request to execute the first service, and trigger an execution request for the first service on demand, thereby improving network resource utilization.

In some implementations of the second aspect, before sending the second service request message to the third network element, the method further includes: sending a query message to the first network element, where the query message is used to obtain information about the third network element, the query message includes the identifier of the first service, and the first network element supports management of the first service; and receiving the information about the third network element from the first network element.

In some implementations of the second aspect, a network service to be invoked for executing the first service includes a first network service and a second network service, and the method further includes: receiving a first service invocation request message from a first network function, where the first service invocation request message is used to request to invoke the second network service, the first network function supports invocation of the first network service, and the service invocation request message includes an identifier of a second network function that supports invocation of the second network service; sending a second service invocation request message to the second network function based on stored address information of the second network function, where the second service invocation request message is used to invoke the second network service; receiving a third execution result from the second network function; and sending the third execution result to the first network function.

Based on the solution, the second network element maintains the address information of the second network function, and supports an information forwarding function between the first network function and the second network function. This can ensure normal execution of the first service, and implement flexible and lightweight network deployment and management.

In some implementations of the second aspect, before sending the second service invocation request message to the second network function, the method further includes: receiving configuration information from the third network element, where the configuration information includes the address information of the second network function; and storing the address information of the second network function.

Based on the solution, the second network element supports maintenance of the address information of the second network function, and provides addressing logic, that is, may trigger initiation of a second service invocation request to the second network function based on the address information of the second network function, to better provide the first service.

In some implementations of the second aspect, the method further includes: receiving an update message, where the update message is used to update information related to the first service.

Based on the solution, in a process of executing the first service, the information related to the first service may change. The update message is sent, so that the first network element, the second network element, or a network function (or a network service instance) that supports the network service may update, in a timely manner, information associated with the first service, to manage and control the first service.

In some implementations of the second aspect, the network service to be invoked for executing the first service includes the first network service and the second network service, and the information related to the first service includes one or more of the following: information about the first network service and/or information about the second network service; context information of the first service; or policy information and/or subscription information associated with the first service.

For beneficial effects of the second aspect and some implementations of the second aspect, correspondingly refer to the related descriptions of the first aspect. Details are not described herein.

According to a third aspect, a communication method is provided. The method may be performed by a third network element, or may be performed by a chip or a circuit of a third network element. This is not limited in this application. For ease of description, the following provides descriptions by using an example in which the method is performed by the third network element.

The method includes: receiving a service request message, where the service request message is used to request to execute a first service, and the service request message includes an identifier of the first service; obtaining an execution method for the first service, where the execution method includes a network service to be invoked for executing the first service and invocation logic for the network service; and executing the first service based on the execution method for the first service.

For example, the third network element may be a service control function.

According to the solution provided in this application, after receiving the service request message, the third network element may determine the network service to be invoked for executing the first service and the invocation logic for the network service based on the execution method for the first service, and then execute the first service on demand, thereby improving network resource utilization, reducing network operation and maintenance costs, and implementing flexible deployment and management of the network service.

In some implementations of the third aspect, obtaining the execution method for the first service includes: sending a query message to a first network element, where the query message is used to obtain the execution method for the first service, the query message includes the identifier of the first service, and the first network element supports management of the first service; and receiving the execution method for the first service from the first network element.

In some implementations of the third aspect, the method further includes: sending a notification message to the first network element, where the notification message includes the identifier of the first service, and the notification message is used to generate context information of the first service; or generating context information of the first service; and sending the context information of the first service to the first network element, where the first network element supports management of the first service.

In some implementations of the third aspect, before receiving the service request message, the method further includes: receiving a first registration request message, where the first registration request message is used to request to register the first service, where the first network element supports management of the first service; sending a second registration request message to the first network element, where the second registration request message is used to request to register the first service; receiving a second registration response message from the first network element, where the second registration response message indicates a registration result of the first service; and sending a first registration response message, where the first registration response message indicates the registration result of the first service.

In some implementations of the third aspect, the network service to be invoked for executing the first service includes a first network service and a second network service, and executing the first service based on the execution method for the first service includes: sending a service invocation request message to a first network function based on the execution method for the first service, where the service invocation request message is used to request the first network function to invoke the first network service; sending first configuration information to the first network function, where the first configuration information includes address information of a second network function, and the address information of the second network function is used by the first network function to determine a second network function that supports invocation of the second network service; and receiving a first execution result from the first network function.

In some implementations of the third aspect, the network service to be invoked for executing the first service includes a first network service and a second network service, and executing the first service based on the execution method for the first service includes: sending a service invocation request message to a first network function based on the execution method for the first service, where the service invocation request message is used to request the first network function to invoke the first network service; sending second configuration information to a second network element, where the second configuration information includes address information of a second network function, the address information of the second network function is used by the second network element to determine a second network function that supports invocation of the second network service, and the second network element is configured to store address information of one or more network functions; and receiving a second execution result from the first network function.

In some implementations of the third aspect, an update message is sent when information related to the first service changes, where the update message is used to update the information related to the first service.

In some implementations of the third aspect, the network service to be invoked for executing the first service includes the first network service and the second network service, and the information related to the first service includes one or more of the following: information about the first network service and/or information about the second network service; the context information of the first service; or policy information and/or subscription information associated with the first service.

For beneficial effects of the third aspect and some implementations of the third aspect, correspondingly refer to the related descriptions of the first aspect. Details are not described herein.

According to a fourth aspect, a communication method is provided. The method may be performed by a service requester, or may be performed by a chip or a circuit of a service requester. This is not limited in this application. For ease of description, the following provides descriptions by using an example in which the method is performed by the service requester.

The method includes: sending a service request message to a second network element, where the service request message is used to request to execute a first service, and the service request message includes an identifier of the first service; and receiving a service response message from the second network element, where the service response message indicates an execution result of the first service.

According to the solution provided in this application, the service requester may request the first service on demand from the second network element, thereby improving network resource utilization and reducing network operation and maintenance costs.

In some implementations of the fourth aspect, before sending the service request message to the second network element, the method further includes: obtaining identification information of the first service.

In some implementations of the fourth aspect, obtaining the identification information of the first service includes: obtaining the identification information of the first service from a first network element; or obtaining the identification information of the first service from an application function, where the identification information of the first service is generated by the application function or a first network element, and the first network element supports management of the first service.

For beneficial effects of the fourth aspect and some implementations of the fourth aspect, correspondingly refer to the related descriptions of the first aspect. Details are not described herein.

According to a fifth aspect, a communication apparatus is provided. The communication apparatus may be used in the first network element in the first aspect, and may include modules or units that are in a one-to-one correspondence with the methods/operations/steps/actions described in the first aspect. The module or unit may be implemented by a hardware circuit, software, or a combination of a hardware circuit and software.

In some implementations of the fifth aspect, the apparatus includes: a processing unit, configured to determine an execution method for a first service, where the execution method includes a network service to be invoked for executing the first service and invocation logic for the network service; and a transceiver unit, configured to send the execution method to a third network element, where the third network element supports the first service.

The transceiver unit may perform receiving and sending processing in the first aspect and the possible implementations of the first aspect, and the processing unit may perform processing other than the receiving and sending processing in the first aspect and the possible implementations of the first aspect.

According to a sixth aspect, a communication apparatus is provided. The communication apparatus may be used in the second network element in the second aspect, and may include modules or units that are in a one-to-one correspondence with the methods/operations/steps/actions described in the second aspect. The module or unit may be implemented by a hardware circuit, software, or a combination of a hardware circuit and software.

In some implementations of the sixth aspect, the apparatus includes a transceiver unit, configured to receive a first service request message, where the first service request message is used to request to execute a first service, and the first service request message includes an identifier of the first service. The transceiver unit is further configured to send a second service request message to a third network element, where the second service request message is used to request to execute the first service, and the third network element supports the first service.

The transceiver unit may perform receiving and sending processing in the second aspect and the possible implementations of the second aspect. Optionally, the apparatus further includes a processing unit, and the processing unit may perform processing other than the receiving and sending processing in the second aspect and the possible implementations of the second aspect.

According to a seventh aspect, a communication apparatus is provided. The communication apparatus may be used in the third network element in the third aspect, and may include modules or units that are in a one-to-one correspondence with the methods/operations/steps/actions described in the third aspect. The module or unit may be implemented by a hardware circuit, software, or a combination of a hardware circuit and software.

In some implementations of the seventh aspect, the apparatus includes: a transceiver unit, configured to receive a service request message, where the service request message is used to request to execute a first service, and the service request message includes an identifier of the first service; and a processing unit, configured to obtain an execution method for the first service, where the execution method includes a network service to be invoked for executing the first service and invocation logic for the network service. The processing unit is further configured to execute the first service based on the execution method for the first service.

The transceiver unit may perform receiving and sending processing in the third aspect and the possible implementations of the third aspect, and the processing unit may perform processing other than the receiving and sending processing in the third aspect and the possible implementations of the third aspect.

According to an eighth aspect, a communication apparatus is provided. The communication apparatus may be used in the service requester in the fourth aspect, and may include modules or units that are in a one-to-one correspondence with the methods/operations/steps/actions described in the fourth aspect. The module or unit may be implemented by a hardware circuit, software, or a combination of a hardware circuit and software.

In some implementations of the eighth aspect, the apparatus includes a transceiver unit, configured to send a service request message to a second network element, where the service request message is used to request to execute a first service, and the service request message includes an identifier of the first service. The transceiver unit is further configured to receive a service response message from the second network element, where the service response message indicates an execution result of the first service.

The transceiver unit may perform receiving and sending processing in the fourth aspect and the possible implementations of the fourth aspect. Optionally, the apparatus further includes a processing unit, and the processing unit may perform processing other than the receiving and sending processing in the fourth aspect and the possible implementations of the fourth aspect.

According to a ninth aspect, a communication apparatus is provided, including at least one processor. The at least one processor is configured to execute a computer program or instructions, and/or use a logic circuit, to enable the communication apparatus to perform the method in any one of the first aspect to the fourth aspect or any one of the possible implementations of these aspects.

In some implementations of the ninth aspect, the at least one processor is coupled to at least one memory, and the at least one memory stores the computer program or the instructions. Optionally, the communication apparatus further includes the at least one memory. Optionally, the at least one processor is integrated with the at least one memory.

According to a tenth aspect, a chip is provided, including a processor and a communication interface. The communication interface is configured to: receive to-be-processed information and/or data, and send the to-be-processed information and/or data to the processor. The processor is configured to process the to-be-processed information and/or data, so that a communication apparatus in which the chip is installed performs the method in either the first aspect or the second aspect or any one of the possible implementations of these aspects.

According to an eleventh aspect, a computer-readable storage medium is provided. The computer-readable storage medium stores computer instructions. When the computer instructions are run on a computer, the method in any one of the first aspect to the fourth aspect or any one of the possible implementations of these aspects is implemented.

According to a twelfth aspect, a computer program product is provided. The computer program product includes computer program code. When the computer program code is run on a computer, the method in any one of the first aspect to the fourth aspect or any one of the possible implementations of these aspects is implemented.

According to a thirteenth aspect, a wireless communication system is provided, including the communication apparatus in any one or more of the fifth aspect to the seventh aspect.

Optionally, the communication system may further include the communication apparatus in the eighth aspect.

For technical effects of the technical solutions in the fifth aspect to the thirteenth aspect, refer to the descriptions of the corresponding technical effects of the first aspect to the fourth aspect. Details are not described.

### BRIEF DESCRIPTION OF DRAWINGS

FIG. 1 is a diagram of a network architecture to which an embodiment of this application is applicable;
FIG. 2 is a flowchart of an interaction procedure of a communication method 200 according to an embodiment of this application;
FIG. 3 is a flowchart of an interaction procedure of a communication method 300 according to an embodiment of this application;
FIG. 4 is a flowchart of an interaction procedure of a communication method 400 according to an embodiment of this application;
FIG. 5 is a flowchart of an interaction procedure of a communication method 500 according to an embodiment of this application;
FIG. 6 is a flowchart of an interaction procedure of a communication method 600 according to an embodiment of this application;
FIG. 7 is a flowchart of an interaction procedure of a communication method 700 according to an embodiment of this application;
FIG. 8 is a diagram of a communication apparatus 800 according to an embodiment of this application; and
FIG. 9 is a diagram of a communication apparatus 900 according to an embodiment of this application.

### DESCRIPTION OF EMBODIMENTS

The following describes technical solutions of this application with reference to accompanying drawings.

The technical solutions provided in this application may be applied to various communication systems, for example, a 4th generation (4th generation, 4G) communication system, such as a long term evolution (long term evolution, LTE) communication system, a 5G communication system, such as 5G new radio (new radio, NR), a 5G core network (5G Core, 5GC), or various communication systems evolved after 5G, such as a 6th generation (6th generation, 6G) communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and internet-of-things (internet-of-things, IoT) communication systems, or other communication systems.

In a communication system, a part operated by an operator may be referred to as a public land mobile network (public land mobile network, PLMN), which may also be referred to as an operator network or the like. The PLMN is a network established and operated for the purpose of providing a land mobile communication service for the public. The PLMN is mainly a public network that a mobile network operator (mobile network operator, MNO) provides a mobile broadband access service for users. The PLMN described in embodiments of this application may be specifically a network that meets a 3GPP standard requirement, which is briefly referred to as a 3GPP network. The 3GPP network usually includes but is not limited to a 5G mobile communication network, a 4G mobile communication network, and another communication system that is evolved after 5G, such as a 6G mobile communication network.

For ease of description, the PLMN or the 5G network is used as an example for description in embodiments of this application.

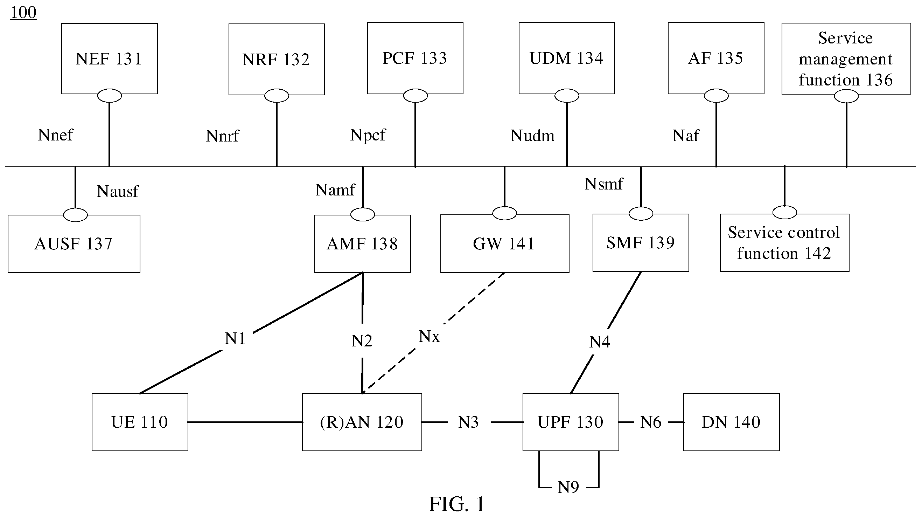

FIG. 1 is a diagram of a network architecture 100 to which an embodiment of this application is applicable. A 5G network architecture of a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include UE 110. The UE 110 in this application is a device having wireless sending and receiving functions, and may communicate with one or more core network (core network, CN) devices by using an access network device (or may be referred to as an access device) in the (radio) access network (R)AN 120. The UE 110 may also be referred to as user equipment (user equipment, UE), an access terminal, a terminal, a subscriber unit, a subscriber station, a mobile console, a mobile station (mobile station, MS), a mobile terminal (mobile terminal, MT), a remote station, a remote terminal, a mobile device, a user terminal, a user agent, a user apparatus, or the like. The terminal device 110 may alternatively be a device configured to provide voice and/or data connectivity for a user, or may be an internet-of-things device. For example, the UE 110 includes a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. Currently, the UE 110 may be a mobile phone, a tablet computer, a notebook computer, a palmtop computer, a mobile internet device (mobile internet device, MID), a wearable device (for example, a smart watch, a smart band, a pedometer, smart glasses, or the like), a vehicle-mounted device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The UE 110 may alternatively be a vehicle apparatus, for example, an entire vehicle apparatus, a vehicle-mounted module, a vehicle-mounted chip, an on-board unit (on-board unit, OBU), or an internet of vehicles telematics box (telematics box, T-BOX). The UE 110 may alternatively be another device having a terminal function. For example, the UE 110 may alternatively be a device that functions as a terminal in D2D communication. A type or a category of the terminal device is not limited in embodiments of this application. The UE 110 may be deployed on land, including an indoor or outdoor device, or a handheld or vehicle-mounted device, may be deployed on a water surface (for example, on a ship), or may be deployed in the air (for example, on an airplane, a balloon, or a satellite).

The (R)AN 120 may include one or more access network elements or access network devices (which may also be referred to as a network device). In other words, the network device is a node in the (R)AN 120, and may also be referred to as a RAN node (or device). An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the UE 110, and may connect the terminal device to a node or a device in a wireless network. The network architecture 100 may include one or more (R)ANs 120. The plurality of (R)ANs 120 may be nodes of a same type, or may be nodes of different types. The (R)AN 120 may be considered as a sub-network of the operator network, and is an implementation system between a service node in the operator network and the UE 110. For example, the UE 110 may be connected to the service node of the operator network via the (R)AN 120, to obtain a service provided by the service node.

In a possible scenario, the (R)AN 120 includes but is not limited to a next generation node base station (next generation node base station, gNB) in a 5G system, an evolved NodeB (evolved NodeB, eNodeB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a pico base station device, a mobile switching center, a next-generation base station in a 6G mobile communication system, a base station in a future mobile communication system, a satellite, or an access point (access point, AP) in a Wi-Fi system, an integrated access and backhaul (integrated access and backhaul, IAB) node, and a network device in a mobile switching center non-terrestrial communication network (non-terrestrial network, NTN) communication system. That is, the (R)AN 120 may be deployed on a high-altitude platform or a satellite. In this case, the satellite may support functions of the (R)AN 120. In addition, the (R)AN 120 may also be deployed on land, for example, outdoors; or may be deployed on a water surface, for example, on a ship. The (R)AN 120 may be a macro base station, a micro base station or an indoor base station, a relay node or a donor node, or a radio controller in a CRAN scenario. The (R)AN 120 may alternatively be a device that functions as a base station in device-to-device (device-to-device, D2D) communication, internet-of-vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of (R)ANs 120 collaborate to assist the terminal in implementing radio access, and different (R)ANs 120 separately implement a part of functions of the base station. For example, the (R)AN 120 may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the (R)AN 120 may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, an application function (application function, AF) 135, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network.

The following further briefly describes functions of the NFs included in the CN.
1. The UPF 130 is a user plane function provided by an operator, and is a user plane function for communication between the operator network and the DN 140. The UPF network function 130 includes user plane-related functions such as packet routing and transmission, packet inspection, traffic usage reporting, quality of service (quality of service, QoS) handling, uplink packet detection, and downlink packet storage.
2. The NEF 131 is a control plane function provided by the operator, mainly enables a third party to use a service provided by the network, and supports exposure of capabilities, events, and analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to govern network behavior and provision of policy rules for control plane network functions, and is responsible for accessing user subscription information relevant for policy decisions. For example, the PCF 133 may be divided into two PCFs having different functions: a UE-PCF and an SM-PCF.
5. The UDM 134 is a control plane function provided by the operator, and is responsible for storing information such as a subscriber permanent identifier (subscriber permanent identifier, SUPI), a generic public subscriber identifier (generic public subscriber identifier, GPSI), and a credential of a subscriber in the operator network. The SUPI is first encrypted during transmission, and an encrypted SUPI is referred to as a subscription concealed identifier (subscription concealed identifier, SUCI). The information stored in the UDM network function 134 may be used for authentication and authorization for accessing the operator network by the UE 110. The subscriber of the operator network may be specifically a subscriber who uses a service provided by the operator network. The credential of the subscriber may be a long-term key stored in a subscriber identity module card of a mobile phone, or a stored small file, for example, information related to encryption of a subscriber identity module card of a mobile phone, and is used for authentication and/or authorization. It should be noted that for ease of description, information such as the permanent identifier, the credential, a security context, authentication data, and a token related to verification/authentication and authorization is not distinguished or limited in embodiments of this application.
6. The AF 135 is a control plane function provided by the operator, and mainly interacts with other NFs in the PLMN to provide corresponding services such as provision of visited network selection information for roaming UE, traffic routing guidance, and access to the NEF 131.
7. The AUSF 137 is a control plane function provided by the operator, and is usually used for primary authentication, that is, authentication between the UE 110 (a subscriber) and the operator network.
8. The AMF 138 is a control plane network function provided by the operator network, and is responsible for access control and mobility management when the UE 110 accesses the operator network, for example, including functions such as mobility status management, allocation of a temporary user identity, and user authentication and authorization.
9. The SMF 139 is a control plane network function provided by the operator network, is responsible for managing a protocol data unit (protocol data unit, PDU) session (including session establishment, modification, and release) of the UE 110, and is for selection and reselection of a user plane function, internet protocol (internet protocol, IP) address allocation of the terminal device, quality of service (quality of service, QoS) control, and the like. The PDU session is a channel for transmitting a PDU, and the terminal device and the DN 140 transmit the PDU to each other through the PDU session. The SMF network function 139 is responsible for establishment, maintenance, deletion, and other operations of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It should be understood that the foregoing network elements or NFs may be physical entities in a hardware device, software instances running on dedicated hardware, or virtualized functions instantiated on a sharing platform (for example, a cloud platform). In short, an NF may be implemented by hardware or software. In addition, there may be one or more pieces of hardware (or software) for implementing all functions of an NF.

It should be understood that the AMF, the SMF, the UPF, the NEF, the AUSF, the NRF, the PCF, and the UDM shown in FIG. 1 may be understood as network elements configured to implement different functions in a core network. These network elements may be combined into a network slice on demand, and may be independent devices, or may be integrated into a same device to implement different functions. Specific forms of the network elements are not limited in this application.

It should be further understood that the foregoing names are defined merely for ease of distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

It should be further understood that Nnef, Nnrf, Npcf, Nudm, Nausf, Namf, Nsmf, Naf, N1, N2, N3, N4, N6, and N9 in FIG. 1 are interface sequence numbers. For example, for meanings of the interface sequence numbers, refer to meanings defined in the 3GPP standard protocol. The meanings of the interface sequence numbers are not limited in this application. In addition, interface names between the network functions in FIG. 1 are merely examples. In a specific implementation, an interface name of the system architecture may alternatively be another name. This is not limited in this application.

The current mobile communication network architecture is designed based on independent network elements (or NFs). To provide a network service for a specific use case, an interaction procedure involving multiple network elements must be defined. In addition, to provide a network service externally, the network is required to deploy all network elements in advance to respond to different service requests. The existing network architecture has complex logic, requires tight coupling between network functions, and has fixed invocation logic. Consequently, upgrading or updating network functions involves lengthy cycles, hindering flexible and lightweight network deployment and management

To resolve the foregoing technical problem, in this application, a service management function, a gateway, and a service control function are newly added based on the current network architecture. Specifically, as shown in FIG. 1, the following first separately briefly describes the service management function, the gateway, and the service control function.
1. A service management function 136 may be a control plane function or a management plane function provided by an operator, and services mainly provided include but are not limited to service registration, update, deregistration, subscription/notification, authorization control, service discovery, token (Token) management and authentication, service orchestration, selection of a network function service (NF service) that supports a service, and the like. In embodiments of this application, the service management function 136 is mainly configured to: orchestrate a network service for a first service, and configure service invocation logic for the first service.
2. A gateway (gateway, GW) 141 mainly manages a service interface provided by a network and receives an external API invocation request. Common functions further include identity authentication, routing, rate limiting, charging, monitoring, analysis, policies, alarms, and security. In embodiments of this application, the GW 141 is mainly responsible for maintaining address information and addressing logic (or having a routing function) of an NF or a service control function 142. For example, the GW may send a message to the service control function 142 or the NF based on the addressing logic.
3. The service control function 142 is a control plane network function provided by an operator network, and is mainly responsible for network service lifecycle management. In embodiments of this application, the service control function 142 may receive a service request, and initiate (cold start) or select (hot start) an NF (or a more fine-grained network service) corresponding to a service to provide a service, so as to manage a lifecycle of the NF.

Based on the foregoing newly added network functions NFs (or network elements), this application provides a communication method and a communication apparatus to provide a network service on demand and enable flexible and lightweight network deployment and management.

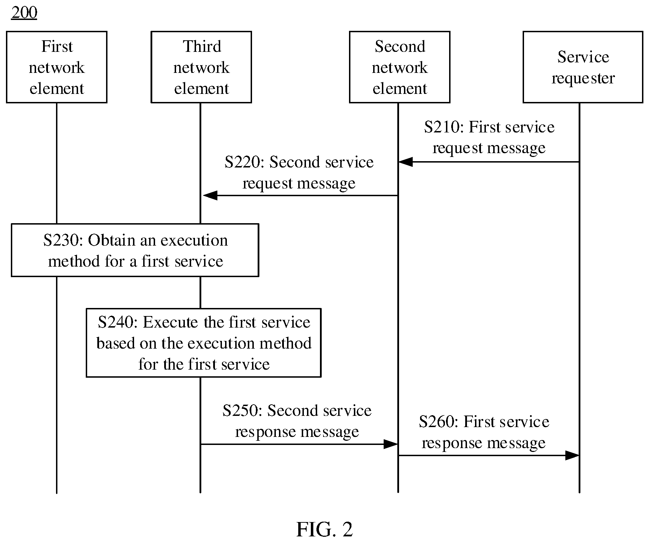

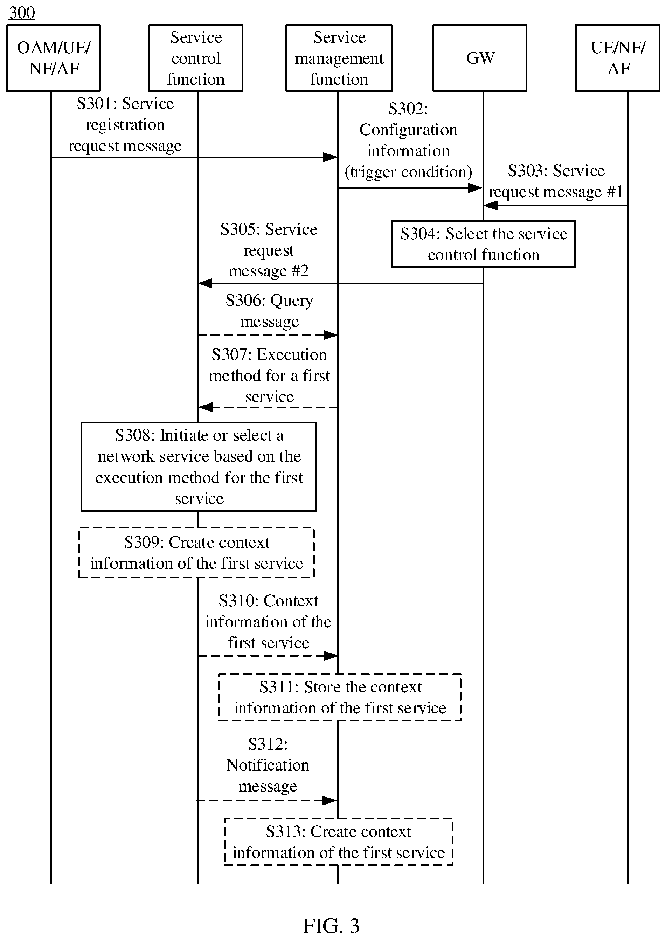

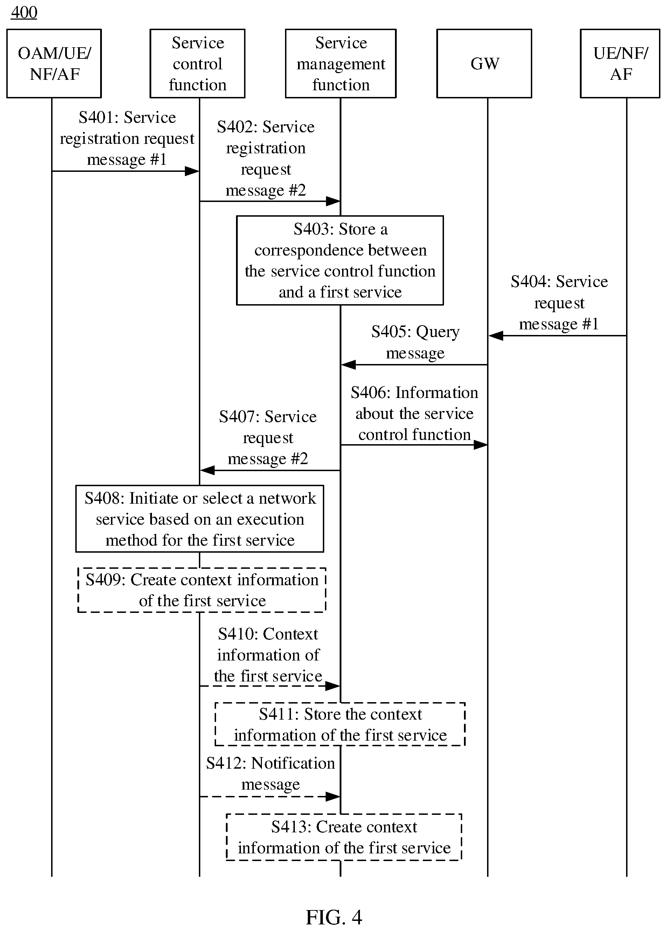

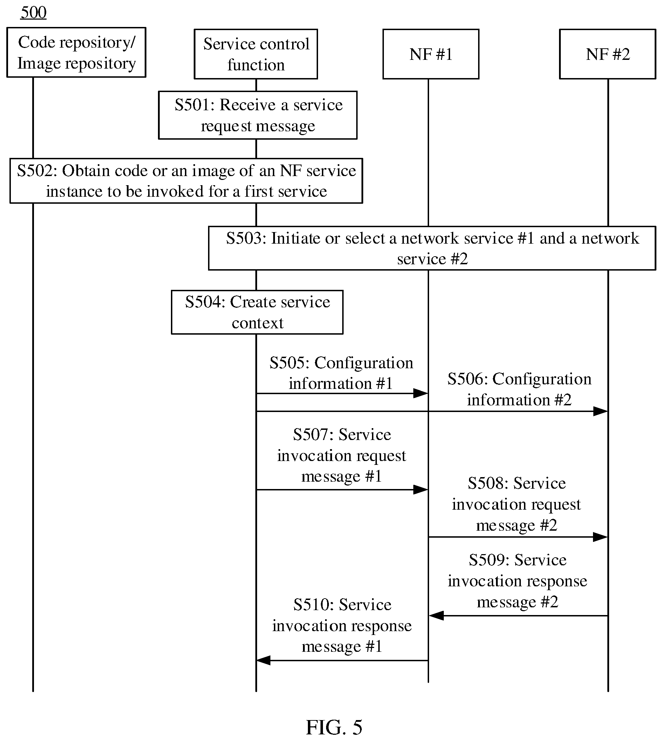

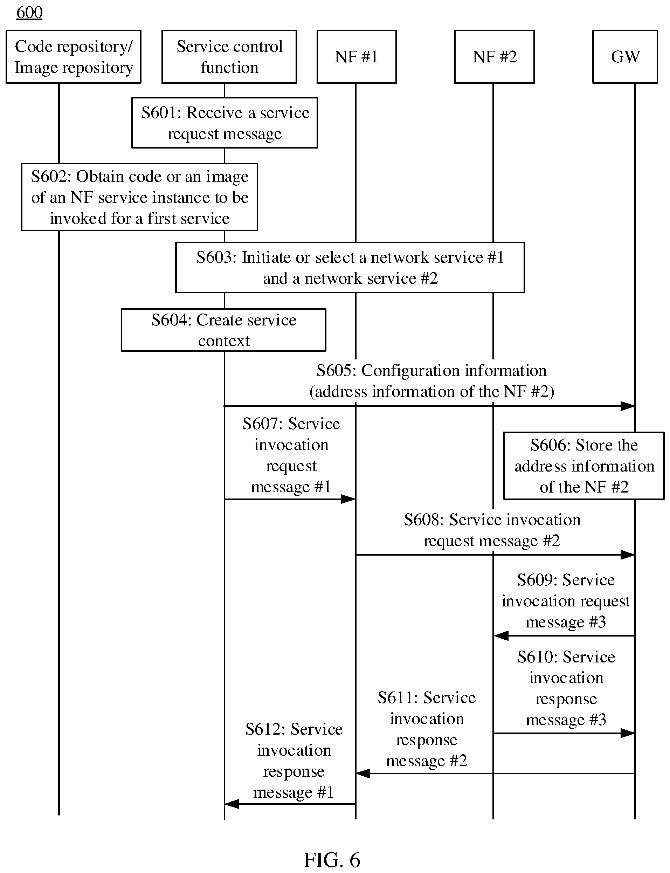

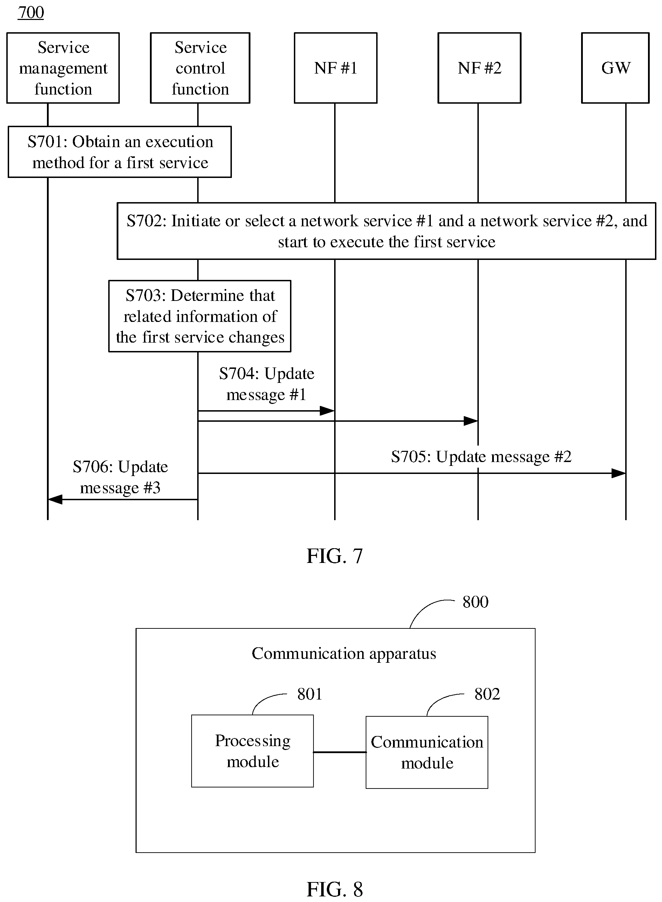

The following describes, in detail with reference to the accompanying drawings, the communication method provided in embodiments of this application. Embodiments provided in this application are applicable to any communication scenario in which a transmit end device communicates with a receive end device, for example, may be applied to the communication system shown in FIG. 1. This application provides the following methods shown in FIG. 2 to FIG. 7. It should be understood that the method embodiments shown in FIG. 2 to FIG. 7 may be combined with each other, and steps in the method embodiments shown in FIG. 2 to FIG. 7 may be mutually referenced. In embodiments of this application, the method embodiments shown in FIG. 3 to FIG. 7 may be considered as possible implementations of implementing functions in the method embodiment shown in FIG. 2. FIG. 3 and FIG. 4 mainly describe examples of definition/registration of a first service and a triggering procedure of the first service. FIG. 5 and FIG. 6 mainly describe invocation of a corresponding network service by a network service instance (or a network function NF) after a third network element initiates or selects the network service. FIG. 7 mainly describes an update procedure when information related to the first service changes in a process of executing the first service.

It should be noted that the network service in embodiments of this application may be replaced with a network function service. For ease of description, the network service is used as an example for description in this application. The network service instance in embodiments of this application is an instance of a network service, and may be understood as a network function NF or a network element that can invoke or execute the network service. In other words, the network service instance may be a specific NF. In addition, in embodiments of this application, the first service is different from a network service to be invoked for executing the first service. For ease of differentiation and description, the first service may be represented by using a service, a transaction (transaction), or a service flow (Service flow), and the network service may be represented by using an NF service.

FIG. 2 is a schematic flowchart of a communication method 200 according to an embodiment of this application. As shown in FIG. 2, the method procedure may be performed by a first network element (for example, the service management function shown in FIG. 1), a second network element (for example, the GW shown in FIG. 1), and a third network element (for example, the service control function shown in FIG. 1), or may be performed by modules and/or components (for example, chips or integrated circuits) installed in a first network element, a second network element, and a third network element and having corresponding functions. This is not limited in this application. For ease of description, the following uses the first network element, the second network element, and the third network element as execution bodies for description. The method includes the following plurality of steps.

S210: A service requester sends a first service request message to the second network element. Correspondingly, the second network element receives the first service request message from the service requester.

The first service request message is used to request to execute a first service.

For example, the first service may be a service provided by a current 5G network, for example, a protocol data unit (protocol data unit, PDU) session establishment/update service, a registration service, or a positioning service, or may be a service provided by a future newly added network, for example, a sensing service, a computing service, a data service, an artificial intelligence (artificial intelligence, AI) service, a cloud terminal service, a data compression service, an AI model training service, or a virtual user creation service.

For example, the service requester may be a terminal device, a third-party application server, a network function, a radio access network function, or the like. This is not limited in this application.

Optionally, the first service request message may include one or more of the following information, that is, the first service may be indicated in plaintext.
(1) Information about the service requester, for example, an identifier (for example, an NF ID, a UE ID, or an AF ID) of the service requester
(2) Information related to the first service, for example, including one or more of the following: an identifier or a name (for example, Service ID/name) of the first service, address information (for example, an IP address and a MAC address) of the first service, a fully qualified domain name (fully qualified domain name, FQDN) of the first service, and an application programming interface (Application Programming Interface, API)
(3) Another parameter, for example, a quality of service QoS parameter of the first service

Optionally, the first service request message may implicitly indicate the first service. In this case, the first service request message may not carry the information related to the first service. For example, if the first service request message is a session establishment request message, it may be determined that the first service is a session establishment service.

In a possible implementation, if the first service in step S210 is indicated in plaintext, before step S210 is performed, the service requester obtains the information related to the first service. That is, the method further includes the following step S201.

S201: The service requester obtains the information related to the first service.

In a first example, the service requester obtains the information related to the first service from the first network element. For example, in a process of defining/registering the first service, the service requester may obtain the identifier of the first service from a service registration response message. For a specific implementation, refer to related descriptions of the following step S203.

In a second example, the service requester obtains the information related to the first service from an application function. The information related to the first service may be generated by the application function. Alternatively, the information related to the first service may be generated by the first network element and sent by the first network element to the application function.

In a possible implementation, before step S210 is performed, the first network element may define/register the first service. That is, the method further includes the following steps S202 and S203.

S202: Another node or function sends a service registration request message to the first network element. Correspondingly, the first network element receives the service registration request message from the another node or function. The service registration request message is used to request to define or register the first service. Defining or registering the first service may be understood as orchestrating a network service to be invoked for the first service, that is, determining a network service to be invoked for executing the first service and invocation logic for the network service (which may also be referred to as an execution method for the first service). Optionally, the service registration request message carries the information related to the first service.

For example, the another node or function may be a terminal device, an operation and maintenance management system of an operator, a third-party application server, a network function, a radio access network function, or the like. This is not limited in this application. It should be understood that the another node or function herein includes the service requester in step S210.

S203: The first network element sends a service registration response message to the another node or function, where the service registration response message indicates a registration result of the first service, and the registration result includes a registration success or a registration failure. Optionally, the service registration response message includes the registration result.

It should be understood that this embodiment of this application is performed when the first service is successfully registered. In this case, the another node or function supports use of the first service.

In this embodiment of this application, an execution body for orchestrating the network service to be invoked for the first service may be the first network element, or may be the another node or function. For a specific implementation, refer to the following manner 1 and manner 2. In the manner 1, the another node or function orchestrates the network service. In the manner 2, the first network element orchestrates the network service.

### Manner 1:

For example, the another node or function notifies, by using the service registration request message in step S202, the first network element of customized orchestration for the network service to be invoked for executing the first service. In this case, the service registration request message may include one or more of the following information:
(1) Information related to the first service: For specific content and explanations thereof, refer to the related descriptions of step S210.
(2) Information about a network service (NF Service) or a network service instance (NF Service Instance) to be invoked for executing the first service, for example, an identifier and/or address information of the network service

For example, if the first service is a PDU session establishment service, a network service to be invoked for executing the PDU session establishment service includes obtaining session subscription information of UE, obtaining session policy information of the UE, and establishing an end-to-end communication pipeline (that is, a connection between UE-RAN-UPF-DN) for the UE. Correspondingly, the network service instance (or a network function NF) may be a UDM, a PCF, an SMF, or the like.

(3) Trigger condition of the first service, including one or more of the following:
(a) Service request message: For example, when receiving a service request message for the first service, the second network element may trigger execution of the first service.
(b) Information related to the first service: For example, when receiving the information (for example, the identifier or the name of the first service) related to the first service, the second network element may trigger execution of the first service.
(c) Timer: For example, the second network element may start a timer, and trigger execution of the first service after the timer expires.
(d) Trigger event: For example, the trigger event may be one or more of the following: The service requester (for example, the UE) enters a specific location, subscription information or policy information of the service requester (for example, the UE) changes, and so on. That is, when the trigger event occurs or is about to occur, the second network element may trigger execution of the first service. Optionally, the second network element may obtain the trigger event from the PCF/UDM/UDR, the UE, or the first network element.

It should be understood that triggering execution of the first service may be understood as follows: The second network element sends a service request message to the third network element, to request to execute the first service. That is, the second network element may request, based on the trigger condition, the third network element to execute the first service, or in response to the trigger condition, the second network element may request the third network element to execute the first service.

### Manner 2:

For example, the another node or function requests the first network element to orchestrate the network service to be invoked for the first service. For example, the first network element may perform selection based on a granularity of a network service. After determining a first network service and a second network service to be invoked for executing the first service, the first network element selects an appropriate network service instance for orchestration based on an input parameter of the first service. After the orchestration is completed, in response to the service registration request message in step S202, the first network element may include the identifier or name of the first service in the service registration response message in step S203, and send the service registration response message to the another node or function, to indicate that definition or registration of the first service has been completed.

For example, the input parameter of the first service may include one or more of the following:
(1) Location information, which may indicate a range in which the first service can be provided. For example, the first service can be provided only in a specific area, or the first service cannot be provided in some areas.
(2) Service type of the first service, which may be used to distinguish between service attributes, for example, a connectivity service, a computing service, a sensing service, and an AI service.
(3) Capability information, which is mainly for a capability of the terminal device. For example, the first service may be provided for a 6G terminal device, or a sensing-related first service may be provided for a terminal device with a sensing capability.
(4) User number segment or user identifier, which may indicate a user who supports the use of the first service.

Optionally, the service registration response message may further carry one or more of the following information. For specific explanations, refer to the related descriptions of steps S210 and S203.
(1) Information about a network service or a network service instance to be invoked for executing the first service
(2) Address information, API, FQDN, and other information of the first service
(3) Trigger condition of the first service
(4) Another parameter, for example, a quality of service QoS parameter of the first service

Optionally, the input parameter of the first service may be obtained by the first network element from the UDM and/or the PCF.

For example, Table 1 describes an orchestration result of the network service to be invoked for executing the first service. As described in Table 1, for a first service (for example, the identifier/name of the first service is Service 11), it may be learned, based on steps S201 to S203, that the first network element or the another node or function determines that network services to be invoked for executing Service 11 are NF Service_1 and NF Service_2, and selects appropriate network service instances, namely NF Service_1_1 and NF Service_2_1, based on a corresponding input parameter (for example, one or more of the following: the location information, the service type of the first service, the capability information, and the user number segment), to complete orchestration of the network service and the network service instance. It should be understood that a network service instance (or a network function) supports invocation of a corresponding network service. For example, NF Service_1_1 supports invocation of NF Service_1, and NF Service_2_1 supports invocation of NF Service_2. Optionally, Service 11 may be executed when the trigger condition of the first service is met. For example, when the third network element receives Service 11 or an IP address indicating Service 11, the third network element determines to execute Service 11. Similarly, for the first service Service 22, the first network element or the another node or function determines that network services to be invoked for executing Service 22 is NF Service_1 and NF Service_3, and selects appropriate network service instances, namely NF Service_1_1, NF Service_1_2, and NF Service_3_1, based on the input parameter. Both NF Service_1_1 and NF Service_1_2 support invocation of NF Service_1, and NF Service_3_1 supports invocation of NF Service_2. Optionally, Service 22 may be executed when the trigger condition of the first service is met. For example, when the third network element receives a service request message or the subscription information of the UE changes, the third network element determines to execute Service 22.

**Table 1**

| Identifier/Name of the first service | Trigger condition of the first service | Network service | Network service instance | Input parameter |
|---|---|---|---|---|
| Service 11 | Identifier or name of the first service/Address information of the first service/Timer/Trigger event... | NF Service_1 | NF Service_1_1 | Location information/Service type of the first service/Capability information/User number segment |
| | | NF Service_2 | NF Service_2_1 | Location information/Service type of the first service/Capability information/User number segment |
| Service 22 | Service request message/Address information of the first service/Timer/Trigger event... | NF Service_1 | NF Service_1_1 | Location information/Service type of the first service/Capability information/User number segment |
| | | | NF Service_1_2 | Location information/Service type of the first service/Capability information/User number segment |
| | | NF Service_3 | NF Service_3_1 | Location information/Service type of the first service/Capability information/User number segment |

It should be understood that Table 1 is merely an example provided for ease of understanding, and does not constitute any limitation on the technical solutions of this application. For the trigger condition of the first service, information included in the input parameter, and explanations of the information in Table 1, refer to the related descriptions of step S203. Details are not described herein.

Optionally, in steps S202 and S203, the another node or function may send the service registration request message to the first network element through the third network element. It should be understood that necessary processing, for example, a format change, may be performed between a source end that sends the service registration request information and a destination end, but the destination end may obtain and parse valid information from the source end. For example, the another node or function sends a service registration request message #1 to the third network element, and then after receiving the service registration request message #1, the third network element sends a service registration request message #2 to the third network element. Both the service registration request message #1 and the service registration request message #2 are used to request to register the first service. Correspondingly, the first network element sends a service registration response message #2 to the third network element, and then after receiving the service registration response message #2, the third network element sends a service registration response message #1 to the another node or function. Both the service registration response message #1 and the service registration response message #2 indicate a registration result of the first service.

In this embodiment of this application, there may be a binding relationship or there may be no binding relationship between the third network element and the first service. For example, when there is a binding relationship between the third network element and the first service, the registration request message #2 may carry information about the third network element, for example, an identifier and/or address information of the third network element. Correspondingly, the first network element stores a correspondence between the information about the third network element and the information related to the first service, in other words, the first network element maintains (or stores) the correspondence. That is, registration and discovery of the third network element are completed by the first network element. Optionally, in actual deployment, registration and discovery of the third network element may alternatively be completed by another function (or network element), for example, the NRF shown in FIG. 1, or another network function having a service management and maintenance NF capability. This is not limited in this application.

The following describes a binding relationship between the information about the third network element and the information related to the first service, for example, including one or more of the following:
(1) a third network element (for example, a service control (Service control, SC)) at a granularity of a network function or a network service instance, for example, an AMF-SC corresponding to an AMF, indicating that the correspondence may be one-to-one; or an {AMF/SMF/PCF}-SC corresponding to an AMF/SMF/PCF, indicating that the correspondence may be many-to-one;
(2) an SC at a granularity of a service or a network service, for example, an SC corresponding to a session establishment service, an SC corresponding to a registration service, an SC corresponding to a positioning service, an SC corresponding to a computing service, or an SC corresponding to a data compression service;
(3) an SC at a granularity of a slice or a network, for example, an SC corresponding to a network slice, an SC corresponding to a sub-network, or an SC corresponding to a PLMN;
(4) an SC at a granularity of a user, for example, an SC corresponding to a user number segment; and
(5) an SC at a granularity of a different geographical location or area, for example, an SC corresponding to an area 1, and an SC corresponding to an area 2.

It should be understood that the foregoing correspondence between the information about the third network element and the first service is merely an example provided for ease of understanding, and does not constitute any limitation on the technical solutions of this application. Based on the correspondence between the information about the third network element and the first service, the technical solutions of this application support providing the first service for a service requester (for example, UE) in a specific area, slice, or sub-network on demand and flexibly deploying the third network element on demand, to control the first service.

S220: The second network element sends a second service request message to the third network element. The third network element receives the second service request message from the second network element.

It should be understood that the first service request message in step S210 and the second service request message in step S220 may be the same or different. For example, after receiving the first service request message, the second network element may perform necessary processing on the first service request message, for example, a format change, to obtain the second service request message. However, functions of the first service request message and the second service request message are the same, that is, the second service request message is used to request to execute the first service.

Optionally, for content included in the second service request message and explanations thereof, refer to the related descriptions of step S210. Optionally, the second service request message may also explicitly or implicitly indicate the first service. For details, refer to the related descriptions of the first service request message.

In an example, the second network element may trigger execution of the first service when the trigger condition of the first service is met. That is, the second service request message is sent to the third network element when the trigger condition of the first service is met.

In a possible implementation, before step S220 is performed, the second network element obtains the trigger condition of the first service. That is, the method further includes the following step S204.

S204: The second network element obtains the trigger condition of the first service.

For content of the trigger condition of the first service and explanations thereof, refer to the related descriptions of step S203.

In an example, the second network element may obtain the trigger condition of the first service from the first network element.

For example, the first network element sends configuration information to the second network element. Correspondingly, the second network element receives the configuration information from the first network element, where the configuration information includes the trigger condition of the first service. Optionally, before the second network element receives the configuration information from the first network element, the method further includes: The second network element sends a request message to the first network element, to request to obtain the trigger condition of the first service. That is, the trigger condition of the first service may be actively sent by the first network element, or may be sent by the first network element based on a request from the second network element. This is not limited in this application.

In a possible implementation, before step S220 is performed, the second network element determines information about a third network element that supports the first service. That is, the method further includes the following step S205.

S205: The second network element obtains information about the third network element, for example, an identifier and/or address information of the third network element.

In an example, the second network element may obtain the information about the third network element from the first network element. For example, the second network element sends a query message to the first network element. Correspondingly, the first network element receives the query message from the second network element. The query message is used to obtain the information about the third network element that supports the first service. The third network element that supports the first service may be understood as follows: The third network element has a function or a capability of executing the first service. Further, the first network element may send the information about the third network element to the second network element based on the stored correspondence between the information about the third network element and the information related to the first service.

For example, the query message may include one or more of the following:
(1) Information related to the first service
(2) Information about the service requester
(3) Service location information, for example, service location information supported by the third network element
(4) Network information, for example, information about a network in which the third network element is located (for example, a PLMN ID, slice information, and a data network name (data network name, DNN))

For content included in (1) and (2) and explanations thereof, refer to the related descriptions of step S201.

Optionally, the query message may explicitly or implicitly indicate the first service. For example, the query message carries the identifier or the name of the first service. Alternatively, the query message may indicate the first service. In this case, the query message may not carry the information related to the first service. For example, the query message may be a session establishment service query message, and is used to obtain information about a third network element that supports the session establishment service. In this case, the query message may not carry information related to the session establishment service.

S230: The third network element obtains an execution method for the first service.

The execution method for the first service includes a network service to be invoked for executing the first service and invocation logic for the network service. In this application, the invocation logic for the network service may be understood as an execution rule, for example, an invocation sequence of a plurality of network services to be invoked for executing the first service, an invocation result of invoking the network service, or a manner of processing an execution result of executing the first service.

In a possible implementation, the execution method for the first service further includes one or more of the following:
(1) a service policy, indicating a rule or a restriction of a network service provided by the NF, for example, QoS of a network service that can be provided by the NF, a charging rule, a location restriction that supports use of the network service, and a user information restriction; and
(2) an NF lifecycle management policy, indicating a status processing policy of the network service provided by the NF, for example, an occasion/condition for initiating or selecting a network service (or a network service instance), or an occasion/condition for releasing or deleting a network service (or a network service instance).

In an example, the third network element obtains the execution method for the first service from the first network element.

For example, the execution method for the first service may be dynamically configured (dynamically configured) by the first network element by using signaling or a message, or may be preconfigured (preconfigured). For example, corresponding code, a table, or another manner that may indicate the execution method for the first service may be pre-stored in the third network element for implementation. An implementation of the execution method for the first service is not limited in this application.

For another example, the third network element sends a query message to the first network element, to obtain the execution method for the first service. The query message may include the information related to the first service. Correspondingly, after receiving the query message from the third network element, the first network element sends the execution method for the first service to the third network element.

Optionally, the third network element may alternatively obtain the first execution method from another network function. For example, the third network element may obtain the execution method for the first service from the NRF. For a specific implementation, refer to the related descriptions of obtaining the execution method for the first service by the third network element from the first network element. This is not limited in this application.

For example, Table 2 shows the network service to be invoked for executing the first service and the invocation logic for the network service. As shown in Table 2, for the first service (for example, the identifier/name of the first service is Service 1), the third network element may determine that a network service to be invoked for executing Service 1 is NF Service_1 and NF Service_2. The network service instance NF Service_1_1 supports invocation of NF Service_1, and the network service instance NF Service_2_1 supports invocation of NF Service_2.

For example, the third network element may send a service invocation request message #a to NF Service_1_1, to request to invoke NF Service_1. The service invocation request message #a may carry an invocation sequence 1, a service input parameter A1 (for example, the information about the service requester, the information related to the first service, and an expected quality of service parameter), and a sending address, that is, NF Service_1_2 or a GW, of an execution result. In this case, after NF Service_1_1 invokes NF Service_1, an execution result #1 may be obtained, to indicate whether NF Service_1 is successfully invoked. Further, NF Service_1_1 may send a service invocation request message #b to NF Service_1_2 or the GW based on the sending address of the execution result, to request NF Service_1_2 to invoke NF Service_2. The service invocation request message #b may carry the execution result #1, an invocation sequence 2, a service input parameter A2 (for example, the information about the service requester, the information related to the first service, and an expected quality of service parameter), and a sending address, that is, the third network element or a GW, of an execution result. In this case, after NF Service_1_2 invokes NF Service_2, an execution result #2 may be obtained, to indicate whether NF Service_2 is successfully invoked. Further, NF Service_1_2 may send the execution result #1 and the execution result #2 to the third network element or the GW based on the sending address of the execution result. Optionally, NF Service_1_2 may combine the execution result #1 and the execution result #2 to obtain an execution result #3, and send the execution result #3 to the third network element or the GW. If NF Service_1_2 sends the execution result #1 and the execution result #2 (or the execution result #3) to the GW, the GW further needs to send the execution result #1 and the execution result #2 (or the execution result #3) to the third network element, to complete an execution operation of the first service.

**Table 2**

| Identifier/Name of the first service | Network service | Network service instance | Invocation logic for the network service |
|---|---|---|---|
| Service 1 | NF Service_1 | NF Service_1_1 | The invocation sequence is 1, the service input parameter is A1, the expected service output parameter is B1, and the sending address of the execution result is NF Service_1_2/the GW |
| | NF Service_2 | NF Service_1_2 | The invocation sequence is 2, the service input parameter is A2, the expected output parameter is B2, and the sending address of the execution result is the GW/third network element |

It should be understood that Table 2 is merely an example provided for ease of understanding, and does not constitute any limitation on the technical solutions of this application.

S240: The third network element executes the first service based on the execution method for the first service.

For example, the third network element may select an NF resource in a proper location or area for initiation or selection based on one or more of information such as a location/slice, cold start and hot start of an NF resource, and a load status of the NF. For example, for execution of the first service, the third network element chooses to initiate or selects the first network service and the second network service based on the execution method for the first service, and determines that a first network function supports invocation of the first network service, and a second network function supports invocation of the second network service. Optionally, the first network function and the second network function each may be UE, an NF, an AF, or a RAN. This is not limited in this application. In this application, a quantity of network functions and/or network services associated with the first service is not limited. It may be understood that a same network function supports invocation of one or more network services, and different network functions may support a same network service.

Optionally, before the third network element initiates or selects the first network service and the second network service, the third network element may obtain, from a code repository/image repository, code or an image of the network service instance to be invoked for the first service, then run the code or the image in an environment (for example, a virtual machine, a container, or another environment) in which the code or the image can be run, and use a network service provided by the network service instance. The code repository/image repository may have related functions of the UDM/UDR in the architecture shown in FIG. 1.

The following uses an example in which the network service to be invoked by the third network element for executing the first service includes the first network service and the second network service to describe a specific implementation in which the third network element executes the first service based on the execution method for the first service. The following manner 1 or manner 2 is included. In the manner 1, information may be exchanged between the first network function and the second network function, and the first network function and the second network function may be simultaneously activated and/or released. In the manner 2, the second network element (for example, a GW) maintains address information of the network function. That is, addressing between the first network function and the second network function is routed through the second network element, and an information forwarding function between the first network function and the second network function is supported. In other words, the first network function and the second network function do not need to be simultaneously activated and/or released. That is, the first network function may be released after step S218 is performed, and the second network function may be released after step S222 is performed. This is not limited in this application.

### Manner 1:

S206: The third network element sends configuration information #1 to the first network function. Correspondingly, the first network function receives the configuration information #1 from the third network element. The configuration information #1 indicates address information of the second network function, and the address information of the second network function is used by the first network function to determine a next-hop node, that is, a second network function that supports invocation of the second network service.

Optionally, the configuration information #1 may alternatively indicate complete path information, that is, address information of the first network function and address information of the second network function corresponding to the first network service and the second network service to be invoked for executing the first service.

S207: The third network element sends configuration information #2 to the second network function. Correspondingly, the second network function receives the configuration information #2 from the third network element. The configuration information #2 indicates address information of the first network function, and the address information of the first network function is used by the second network function to determine a previous-hop node, that is, a first network function that supports invocation of the first network service.

S208: The third network element sends a service invocation request message #1 to the first network function based on the execution method for the first service. Correspondingly, the first network function receives the service invocation request message #1 from the third network element. The service invocation request message is used to request to invoke the first network service.

S209: The first network function invokes the first network service.

S211: The first network function sends a service invocation request message #2 to the second network function based on the address information of the second network function. Correspondingly, the second network function receives the service invocation request message #2 from the first network function. The service invocation request message #2 is used to request to invoke the second network service.

S212: The second network function invokes the second network service, and sends a service invocation response message #2 to the first network function. Correspondingly, the first network function receives the service invocation response message #2 from the second network function. The service invocation response message #2 includes an execution result #2. The execution result #2 indicates whether the second network service is successfully invoked, or is an output result of invoking the second network service.

S213: The first network function sends a service invocation response message #1 to the third network element. Correspondingly, the third network element receives the service invocation response message #1 from the first network function. The service invocation response message #2 includes an execution result #1 and the execution result #2. The execution result #1 indicates whether the first network service is successfully invoked, or is an output result of invoking the first network service.

Optionally, the execution result #1 and the execution result #2 may be combined into an execution result #3. In this case, the service invocation response message #2 includes the execution result #3. For example, if the execution result #1 indicates that the first network service is successfully invoked, and the execution result #2 indicates that the second network service is successfully invoked, the execution result #3 indicates that the first service is successfully executed. For another example, if the execution result #1 indicates that the first network service fails to be invoked, and/or the execution result #2 indicates that the second network service fails to be invoked, the execution result #3 indicates that the first service fails to be executed.

Optionally, an execution sequence of steps S206 and S207, S206 and S208, or S207 and S211 is not limited in this application.

Optionally, the configuration information #1 and the service invocation request message #1 in steps S206 and S208 may be simultaneously sent, may be separately sent, may be carried in two independent messages for sending, or may be carried in a same message for sending. This is not limited in this application. Related descriptions of the configuration information #2 and the service invocation request message #2 in steps S207 and S211 are similar. Details are not described.

Optionally, the network service to be invoked by the third network element for executing the first service may further include a third network service. A third network function supports invocation of the third network service. In this case, the third network element may send configuration information #a to the second network function, to indicate address information of the third network function. After invoking the second network service, the second network function may send a service invocation request message #a to the third network function based on the address information of the third network function, to request the third network function to invoke the third network service. Further, after invoking the third network service, the third network function may send an execution result #a to the second network function, to indicate whether the third network service is successfully invoked. Subsequently, the second network function feeds back the execution result #a and the execution result #2 to the first network function, and the first network function feeds back the execution result #a, the execution result #2, and the execution result #1 to the third network element. For a specific implementation and a variation of the execution result, refer to the foregoing related descriptions.

### Manner 2:

S214: The third network element sends configuration information #3 to the second network element. Correspondingly, the second network element receives the configuration information #3 from the third network element. The configuration information #3 indicates address information of the second network function, and the address information of the second network function is used by the second network element to determine a second network function that supports invocation of the second network service.

S215: The second network element stores the address information of the second network function.

S216: The third network element sends a service invocation request message #3 to the first network function based on the execution method for the first service. The first network function receives the service invocation request message #3 from the third network element. The service invocation request message #3 is used to request the first network function to invoke the first network service.

S217: The first network function invokes the first network service.

S218: The first network function sends a service invocation request message #4 to the second network element. Correspondingly, the second network element receives the service invocation request message #4 from the first network function. The service invocation request message #4 is used to request to invoke the second network service.

S219: The second network element sends a service invocation request message #5 to the second network function based on the address information of the second network function. Correspondingly, the second network function receives the service invocation request message #5 from the second network element. The service invocation request message #5 is used to request to invoke the second network service.

S221: The second network function invokes the second network service.

S222: The second network function sends a service invocation response message #5 to the second network element. Correspondingly, the second network element receives the service invocation response message #5 from the second network function. The service invocation response message #5 includes an execution result #4. The execution result #4 indicates whether the second network service is successfully invoked, or is an output result of invoking the second network service.

S223: The second network element sends a service invocation response message #4 to the first network function. Correspondingly, the first network function receives the service invocation response message #4 from the second network element. The service invocation message #4 includes the execution result #4.

S224: The first network function sends a service invocation response message #3 to the third network element. Correspondingly, the third network element receives the service response message #3 from the first network function. The service response message #3 includes the execution result #4 and an execution result #5. The execution result #5 indicates whether the first network service is successfully invoked, or is an output result of invoking the first network service.

Optionally, the execution result #4 and the execution result #5 may be combined into an execution result #6. In this case, the service invocation response message #3 includes the execution result #6. For example, if the execution result #4 indicates that the first network service is successfully invoked, and the execution result #5 indicates that the second network service is successfully invoked, the execution result #6 indicates that the first service is successfully executed. For another example, if the execution result #4 indicates that the first network service fails to be invoked, and/or the execution result #5 indicates that the second network service fails to be invoked, the execution result #6 indicates that the first service fails to be executed.

Optionally, steps S214 and S215 may be performed before step S219, for example, performed after step S217 or S218. An execution sequence of the steps is not limited in this application.

Optionally, if there are a plurality of same network services in a process of executing the first service, the third network element may send a network service selection rule/policy to the second network element, so that the second network element selects a network service. For example, each network service in the network service selection rule/policy is associated with one or more of the following information: network information (for example, a PLMN ID, slice information, and a DNN), service information (for example, an AF ID and an application identity (application identity, APP ID)), supported user information (for example, a UE ID, an SUPI, and a generic public subscription identifier (generic public subscription identifier, GPSI)), and location information (for example, a tracking area identity (tracking area identity, TAI) and a cell identity (for example, a cell ID)).

Optionally, if a plurality of network functions support invocation of a same network service, the third network element may further send load information of the plurality of network functions to the second network element for load balancing. That is, the second network element may select, based on load statuses of the plurality of network functions, a proper network function to provide the network service, so that the first service can be normally executed, to ensure user service experience.

Optionally, the network service to be invoked by the third network element for executing the first service may further include a third network service. A third network function supports invocation of the third network service. In this case, the third network element may further send configuration information #b to the second network element, to indicate address information of the third network function. Correspondingly, the second network element stores the address information of the third network function. Optionally, the configuration information #3 and the configuration information #b may be same configuration information, or may be different configuration information. For example, after invoking the second network service, the second network function may send the execution result #4 and a service invocation request message #b to the second network element. The service invocation request message #b is used to request to invoke the third network service. The second network element sends a service invocation request message #c to the third network function based on the stored address information of the third network function, to request the third network function to invoke the third network service. Further, after invoking the third network service, the third network function sends an execution result #b to the second network element, to indicate whether the third network service is successfully invoked. Subsequently, the second network element feeds back the execution result #b and the execution result #4 to the first network function, and the first network function feeds back the execution result #b, the execution result #4, and the execution result #5 to the third network element. For a specific implementation and a variation of the execution result, refer to the foregoing related descriptions.

Optionally, the third network element may configure the network service to be invoked for the first service and the invocation logic for the network service for the second network element. For example, after receiving the execution result from the second network function, the second network element initiates a service invocation request for the third network service to the third network function based on the invocation logic for the network service.

Optionally, the configuration information #1 and/or the configuration information #2 in the manner 1 and the configuration information #3 in the manner 2 may further include one or more of the following:

### (1) Service invocation logic of the first service

For example, the third network element may configure, for the first network function, the second network function, and the second network element, all invocation logic of the first network service and the second network service to be invoked for executing the first service.

(2) Execution rule of a current network service and service invocation logic of one or more subsequent network services. In other words, the third network element may configure, for a current network function, only the execution rule of the current network service and the service invocation logic of the one or more subsequent network functions.

For example, for the configuration information #1, the first network function may obtain an execution rule of the first network service and service invocation logic of the second network service. Optionally, if the network function that supports invocation of the second network service is also the first network function, it indicates that the third network element may configure, for the first network function, the execution rule of the first network function and the service invocation logic of the second network function. Then, after invoking the first network service, the first network function may continue to invoke the second network service based on the service invocation logic of the second network service. Further, optionally, if the network service to be invoked for executing the first service further includes a third network service, and the first network function still supports invocation of the third network service, it indicates that the third network element may configure, for the first network function, the execution rule of the first network function and service invocation logic of the second network function and the third network function. Then, after invoking the first network service, the first network function may sequentially invoke the second network service and the third network service based on the service invocation logic of the second network service and the third network service, and so on.

### (3) Exception handling manner

For example, the exception handling manner is determined based on a timer or an event trigger. For example, after sending a request message for invoking the second network service to the second network function, the first network function may start a timer. If no execution result of invoking the second network service by the second network function is received when the timer expires, the first network function may report to the third network element that the execution of the first service fails, or the first network function may resend the request message for invoking the second network service to the second network function. For another example, when a location of a terminal device changes, a QoS requirement of the first service cannot be met, or a charging quota of the terminal device is insufficient, the first network function may report a location update message of the terminal device to the third network element, or notify the service requester and the first network element to stop execution of the first service.

### (4) Execution rule of the first service

For example, the execution rule of the first service may be a log reporting rule, a quality of service rule, or the like. For example, the rule indicates a service QoS requirement that needs to be met during execution of the first service, such as a maximum transmission rate, a minimum delay, or a minimum packet loss rate that needs to be met during data transmission; an amount of computing power, a memory size, and other related parameters that can be provided by a computing service; and sensing accuracy, a sensing range, and other related parameters of a sensing service.

S250: The third network element sends a second service response message to the second network element. The second network element receives the second service response message from the third network element. The second service response message indicates an execution result of the first service, and the execution result includes an execution success or an execution failure. Correspondingly, it may also be understood that the first network service and the second network service are successfully invoked or fail to be invoked. Alternatively, the second service response message may indicate an output result of executing the first service. For example, for the positioning service, the output result may be location information, for example, coordinate information.

S260: The second network element sends a first service response message to the service requester. The service requester receives the first service response message from the second network element. The first service response message indicates the execution result of the first service. For specific explanations, refer to the related descriptions of step S250.

It should be understood that steps S250 and S260 may be considered as that the third network element indirectly sends the execution result of the first service to the first network element through the second network element. Optionally, the third network element may alternatively directly send the execution result of the first service to the first network element. This is not limited in this application.

It should be further understood that in an example in which the network service to be invoked for executing the first service is the first network service and the second network service, the execution result of the first service in steps S250 and S260 may be the execution result #1 and the execution result #2, or the execution result #3 in the manner 1, or may be the execution result #4 and the execution result #5, or the execution result #6 in the manner 2. This is not limited in this application.

Optionally, in the process of executing the first service, the first network element and/or the third network element may generate and maintain context information of the first service, to manage and control the first service in a current network. That is, the method further includes the following manner 1 and manner 2. In the manner 1, the first network element generates and maintains the context information of the first service. In the manner 2, the third network element generates and maintains the context information of the first service.

### Manner 1:

S222: The third network element sends a notification message to the first network element. Correspondingly, the first network element receives the notification message from the third network element.

The notification message includes the information related to the first service (for example, the identifier or the name Service ID/name of the first service), and the notification message is used to request the first network element to generate the context information of the first service.

Optionally, the network (for example, the third network element) may provide the first service for different service requesters. In this case, in the network, a service granularity identifier may be allocated to each service requester using the first service, to distinguish between information about different service requesters. Therefore, the notification message may further include a service session identifier (Service Session ID), a transaction identifier (transaction ID), a service flow identifier (Service flow ID), or the like.

S223: The first network element generates the context information of the first service based on the notification message.

### Manner 2:

S224: The third network element generates the context information of the first service.

S225: The third network element sends the context information of the first service to the first network element. Correspondingly, the first network element supports receiving the context information of the first service from the third network element.

For example, the context information of the first service includes one or more of the following information. For specific explanations, refer to the foregoing related descriptions.
(1) Information related to the first service
(2) Information about the service requester, for example, information about a service requester that supports or requests to use the first service (for example, a UE ID)
(3) Information about a network service, for example, an identifier of the network service to be invoked for executing the first service
(4) Information about a network service instance, for example, an identifier and/or address information of a network service instance that supports invocation of the network service
(5) Execution method for the first service
(6) Information about the third network element that supports the first service, for example, an identifier and/or address information of a service control function
(7) Session identification information (for example, Service Session ID) of the first service, used to identify that the session is a session for the first service
(8) Information about a network function corresponding to the first service, for example, an identifier, address information, or a load status of the network function, where the network function supports invocation of the network service, and optionally, the network function may be equivalent to the network service instance
(9) Binding relationship between another network node or function and the first service, for example, a binding relationship between an identifier of the UE and the identifier of the first service, which may indicate that the UE supports use of the first service, or the UE requests to use the first service
(10) Database information: For example, the database stores data and/or an execution result generated in the process of executing the first service.

That the first network element or the third network element generates the context information of the first service may be understood as storing the context information of the first service, to manage and control the first service.

In a possible implementation, in the process of executing the first service, the information related to the first service may change. Therefore, the first network element, the second network element, or the network function that supports the network service needs to update, in a timely manner, information associated with the first service, so that the network manages and controls the first service. That is, the method further includes the following steps S226 and S227.

S226: The third network element sends an update message to the first network element/network function NF/second network element. Correspondingly, the first network element/network function NF/second network element receives the update message from the third network element. The update message is used to update the information related to the first service. For the information related to the first service, refer to the related descriptions of step S210.

For example, for identification information of the first service, the update message may indicate that the identifier of the first service is changed from Service ID #1 to Service ID #2. In this case, the update message may carry Service ID #2. Alternatively, when the first service is deregistered, the update message indicates to delete the information related to the first service.

For example, for the information about the service requester that supports or requests to use the first service (for example, an identifier and/or address information of the UE/AF/NF), if the NF no longer supports use of the first service, the update message may indicate to delete information about the NF; if UE #1 that supports use of the first service is changed to UE #2, the update message may indicate to change information about the UE; or if an operation administration and maintenance (operation administration and maintenance, OAM) is newly added to support use of the first service, the update message may indicate to add information about the OAM.

Optionally, the information related to the first service may further include one or more of the following:

### (1) Execution method for the first service

For example, to better meet a user service requirement, if the third network service is added to the network service to be invoked for the first service, the update message may carry information about the third network service and service invocation logic of the third network service.

### (2) Information about a network service instance or a network function that supports the network service (for example, an identifier and/or address information of the network function)

For example, based on (1), the update message may carry an identifier and/or address information of the third network function, and the third network function supports invocation of the third network service.

(3) Context information of the first service: For included content and explanations thereof, refer to the related descriptions of step S225.

(4) Policy information and/or subscription information associated with the first service

For example, the policy information and/or the subscription information associated with the first service may include one or more of the following: user information (for example, a UE ID) that supports use, guaranteed subscription information of the first service (for example, bandwidth, a scheduling priority, a delay, and other information supported for use in executing the first service), or subscription usage quota information of the first service (for example, a data plan of the first service and a quota plan when a plurality of users simultaneously request the first service).

(5) Processing of an NF resource based on a status of the user or the first service, for example, processing related to user mobility management and NF switching caused by UE switching
(6) Dynamic NF resource management: For example, when a plurality of NFs are involved in executing the first service, different types of NFs may need different time to execute corresponding network services. Therefore, independent lifecycle management needs to be performed for each NF.

S227: The first network element/network function NF/second network element updates the information related to the first service.

In this application, update may be understood as change, addition, or deletion. If the information related to the first service needs to be changed, the update message may carry updated information related to the first service.

In a first example, in the process of executing the first service, if it is found that the network service is unreachable (for example, the NF is faulty or load of the NF is saturated), network function or network service switching is caused due to movement of the terminal device, or the like, the third network element may send an update message to the second network element, to request the second network element to change or delete NF information.

In a second example, when the NF invokes the network service, if it is found that the service is abnormal (for example, a service policy of the NF changes, quality of service cannot be ensured, or quality of service cannot meet a requirement of the first service), the third network element may send an update message to the network function that supports the network service, to request the network function to change or release the NF resource, including: prolonging activation time of the NF or releasing the NF resource based on a lifecycle management policy of the NF, or starting a timer in the process of executing the first service, and releasing the NF resource or ending execution of the first service when the timer expires, or the like.

In a third example, when one or more pieces of information in the information related to the first service changes, for example, in the process of executing the first service, the policy information and/or the subscription information associated with the first service change/changes, the third network element may send an update message to the first network element, to request the first network element to update the policy information and/or the subscription information associated with the first service.

According to the solution provided in this application, a registration mechanism of the first service is introduced based on a design idea of a dynamic network function. That is, the first network element supports registration or definition of the first service or the network service to be invoked for executing the first service. This can flexibly configure the invocation logic for the network service, provides network service lifecycle management oriented to the first service, improves network resource utilization, supports execution of the first service on demand, reduces network operation and maintenance costs, and implements flexible and lightweight network deployment and management.

FIG. 3 is a schematic flowchart of a communication method 300 according to an embodiment of this application. As shown in FIG. 3, an example in which a first network element is a service management function, a second network element is a gateway GW, and a third network element is a service control function is used for description. The method includes the following plurality of steps. It should be understood that the method 300 shown in FIG. 3 may be considered as a specific implementation of the method shown in FIG. 2. The related descriptions in the embodiment shown in FIG. 2 are also applicable to this implementation. There may be a same or similar technical means between FIG. 3 and FIG. 2. Content described in the embodiment shown in FIG. 2 is not described in FIG. 3.

S301: An OAM/UE/NF/AF sends a service registration request message to the service management function. Correspondingly, the service management function receives the service registration request message from the OAM/UE/NF/AF. The service registration request message is used to request to define or register a first service.

For content of the service registration request message, explanations thereof, and a specific implementation, refer to the related descriptions of step S202 in the method 200.

S302: The service management function sends configuration information to the GW. Correspondingly, the GW receives the configuration information from the service management function. The configuration information is used to configure a trigger condition of the first service.

For content of the configuration information, explanations thereof, and a specific implementation, refer to the related descriptions of step S204 in the method 200.

S303: UE/NF/AF sends a service request message #1 to the GW. Correspondingly, the GW receives the service request message #1 from the UE/NF/AF.

For content of the service request message #1, explanations thereof, and a specific implementation, refer to the related descriptions of step S210 in the method 200.

S304: The GW selects the service control function.

Optionally, the GW may send a query message to the service management function, to obtain information about the service control function, for example, an identifier of the service control function or an address of the service control function. It should be understood that if the service management function maintains service context corresponding to a service identifier/name, the service management function may feed back information about a service control function that supports providing the first service in the service context to the GW. For a specific implementation, refer to the related descriptions of step S205 in the method 200.

S305: The GW sends a service request message #2 to the service control function. Correspondingly, the service control function receives the service request message #2 from the GW.

For content of the service request message #2, explanations thereof, and a specific implementation, refer to the related descriptions of step S220 in the method 200.

S308: The service control function initiates or selects a network service based on an execution method for the first service.

For a specific implementation, refer to the related descriptions of step S240 in the method 200.

It should be understood that in this embodiment of this application, initiation may be understood as activation, and selection may be understood as selecting an activated network service. For example, initiating a network service may be activating a network service, and selecting a network service may be selecting an activated network service. Optionally, initiation may alternatively be understood as cold start, and selection may alternatively be understood as hot start.

Optionally, before step S308 is performed, the service control function obtains the execution method for the first service.

For example, the execution method for the first service may be configured by the service management function or preconfigured for the service control function.

For example, if the service control function locally does not have the execution method for the first service, the service control function requests to obtain the execution method for the first service from the service management function, that is, performs steps S306 and S307.

S306: The service control function sends a query message to the service management function. Correspondingly, the service management function receives the query message from the service control function. The query message is used to obtain the execution method for the first service.

S307: The service management function sends the execution method for the first service to the service control function.

For specific implementations of steps S306 and S307, refer to the related descriptions of step S230 in the method 200.

Optionally, in a process of executing the first service, the service control function or the service management function may generate context information of the first service, that is, perform steps S309 to S311 or steps S312 and S313.

S309: The service control function generates the context information of the first service.

S310: The service control function sends the context information of the first service to the service management function. Correspondingly, the service management function receives the context information of the first service from the service control function.

S311: The service management function stores the context information of the first service.

S312: The service control function sends a notification message to the service management function. The service management function receives the notification message from the service control function. The notification message is used to notify the service management function to generate the context information of the first service.

S313: The service management function generates the context information of the first service.

For explanations of the context information of the first service and specific implementations of steps S309 to S311 or steps S312 and S313, correspondingly refer to the related descriptions of steps S222 and S223 or steps S224 and S225 in the method 200.

In the solution shown in FIG. 3, the service management function is introduced to register or define the first service or a network service to be invoked for executing the first service. This supports flexible configuration of invocation logic for the network service, and provides network service lifecycle management oriented to the first service. In addition, the gateway is introduced to support selection of the service control function on demand, and a request is made to the service control function to execute the first service, thereby improving network resource utilization, and implementing flexible and lightweight network deployment and management.

FIG. 4 is a schematic flowchart of a communication method 400 according to an embodiment of this application. As shown in FIG. 4, an example in which a first network element is a service management function, a second network element is a gateway GW, and a third network element is a service control function is used for description. The method includes the following plurality of steps. It should be understood that the method 400 shown in FIG. 4 may be considered as a specific implementation of the method shown in FIG. 2. The related descriptions in the embodiment shown in FIG. 2 are also applicable to this implementation. There may be a same or similar technical means between FIG. 4 and both FIG. 2 and FIG. 3. Content described in the embodiments shown in FIG. 2 and FIG. 3 is not described in FIG. 4.

S401: An OAM/UE/NF/AF sends a service registration request message #1 to the service control function. Correspondingly, the service control function receives the service registration request message #1 from the OAM/UE/NF/AF.

S402: The service control function sends a service registration request message #2 to the service management function. Correspondingly, the service management function receives the service registration request message #2 from the service control function.

S403: The service management function stores a correspondence between the service control function and a first service.

For the service registration request message #1 and the service registration request message #2 in steps S401 to S403, content of the correspondence, explanations thereof, and a specific implementation, refer to the related descriptions of step S202 in the method 200.

S404: UE/NF/AF sends a service request message #1 to the GW. Correspondingly, the GW receives the service request message #1 from the UE/NF/AF.

S405: The GW sends a query message to the service management function. Correspondingly, the service management function receives the query message from the GW.

S406: The service management function sends information about the service control function to the GW. Correspondingly, the GW receives the information about the service control function from the service management function.

S407: The service management function sends a service request message #2 to the service control function. Correspondingly, the service control function receives the service request message #2 from the service management function.

S408: The service control function initiates or selects a network service based on an execution method for the first service.

S409: The service control function generates context information of the first service.

S410: The service control function sends the context information of the first service to the service management function. Correspondingly, the service management function receives the context information of the first service from the service control function.

S411: The service management function stores the context information of the first service.

S412: The service control function sends a notification message to the service management function. The service management function receives the notification message from the service control function. The notification message indicates the service management function to generate context information of the first service.

S413: The service management function generates the context information of the first service.

For explanations of parameters in steps S404 to S408 and S409 to S413 and specific implementations, correspondingly refer to the related descriptions of steps S303 to S308 and S309 to S313 in the method 300.

In the solution shown in FIG. 4, the service management function is introduced to register or define the first service or a network service to be invoked for executing the first service. This supports flexible configuration of invocation logic for the network service, and provides network service lifecycle management oriented to the first service. In addition, the service management function supports registration and discovery of the service control function, and stores the correspondence between the service control function and the first service. This supports design of corresponding service control functions for different service objects, and provides different levels of network services, thereby reducing management complexity in a network operation and maintenance process, and providing more accurate services.

FIG. 5 is a schematic flowchart of a communication method 500 according to an embodiment of this application. As shown in FIG. 5, an example in which a third network element is a service control function is used to provide a first implementation of executing a first service. An example in which a network service to be invoked by the service control function for executing the first service is a network service #1 and a network service #2 is used for description. The method may be considered as a further refinement of step S308 in the method 300 or step S408 in the method 400. The method includes the following plurality of steps. It should be understood that the method 500 shown in FIG. 5 may be considered as a specific implementation of the method shown in FIG. 2. The related descriptions in the embodiment shown in FIG. 2 are also applicable to this implementation. There may be a same or similar technical means between FIG. 5 and FIG. 2 to FIG. 4. Content described in the embodiments shown in FIG. 2 to FIG. 4 is not described in FIG. 5.

S501: The service control function receives a service request message.

For example, for a specific implementation, refer to the related descriptions of step S305 in the method 300 or step S407 in the method 400.

For example, the service request message may include a parameter that supports invocation of the network service #1, for example, an identifier and/or address information of an NF #1.

S502: The service control function obtains code or an image of a network service instance to be invoked for the first service.

For a specific implementation, refer to the related descriptions of step S240 in the method 200.

S503: The service control function initiates or selects the network service #1 and the network service #2 to be invoked for the first service.

S504: The service control function generates context information of the first service.

For content of the context information of the first service, explanations thereof, and a specific implementation, refer to the related descriptions of steps S309 to S313 in the method 300.

S505: The service control function sends configuration information #1 to the NF #1. Correspondingly, the NF #1 receives the configuration information #1 from the service control function.

S506: The service control function sends configuration information #2 to an NF #2. Correspondingly, the network service #2 receives the configuration information #2 from the service control function.

S507: The service control function sends a service invocation request message #1 to the NF #1. Correspondingly, the network service #1 receives the service invocation request message #1 from the service control function.

S508: The NF #1 sends a service invocation request message #2 to the NF #2. Correspondingly, the NF #2 receives the service invocation request message #2 from the NF #1.

S509: The NF #2 sends a service invocation response message #2 to the NF #1. Correspondingly, the NF #1 receives the service invocation response message #2 from the NF #2.

S510: The NF #1 sends a service invocation response message #1 to the service control function. Correspondingly, the service control function receives the service invocation response message #1 from the NF #1.

For content of the configuration information #1, the configuration information #2, the service invocation request message #1, the service invocation request message #2, the service invocation response message #1, and the service invocation response message #2 in steps S505 to S510, explanations thereof, and specific implementations, refer to the related descriptions of the manner 1 of step S240 in the method 200.

In the solution shown in FIG. 5, the service control function may dynamically initiate or select a network service based on a trigger mechanism, so that different network functions respectively invoke corresponding network services, and the service control function performs lifecycle management on the network services, thereby improving network resource utilization, reducing network operation and maintenance costs, and implementing flexible and lightweight network deployment and management.

FIG. 6 is a schematic flowchart of a communication method 600 according to an embodiment of this application. As shown in FIG. 6, an example in which a third network element is a service control function is used to provide a second implementation of executing a first service. An example in which a network service to be invoked by the service control function for executing the first service is a network service #1 and a network service #2 is used for description. The method may be considered as a further refinement of step S308 in the method 300 or step S408 in the method 400, and is parallel to the solution in the method 500. The method includes the following plurality of steps. It should be understood that the method 600 shown in FIG. 6 may be considered as a specific implementation of the method shown in FIG. 2. The related descriptions in the embodiment shown in FIG. 2 are also applicable to this implementation. There may be a same or similar technical means between FIG. 6 and FIG. 2 to FIG. 5. Content described in the embodiments shown in FIG. 2 to FIG. 5 is not described in FIG. 6.

S601: The service control function receives a service request message.

S602: The service control function obtains code or an image of a network service instance to be invoked for the first service.

S603: The service control function initiates or selects the network service #1 and the network service #2 to be invoked for the first service.

S604: The service control function generates context information of the first service.

For content of the service request message and the context information of the first service in steps S601 to S604, explanations thereof, and specific implementations, refer to the related descriptions of steps S501 to S504 in the method 500.

S605: The service control function sends configuration information to a GW. Correspondingly, the GW receives the configuration information from the service control function.

The configuration information indicates an address of the network service #2. In this implementation, addressing between the network service #1 and the network service #2 is routed and determined through the GW.

S606: The GW stores address information of an NF #2.

S607: The service control function sends a service invocation request message #1 to an NF #1. Correspondingly, the NF #1 receives the service invocation request message #1 from the service control function.

S608: The NF #1 sends a service invocation request message #2 to the GW. Correspondingly, the GW receives the service invocation request message #2 from the NF #1.

S609: The GW sends a service invocation request message #3 to the NF #2 based on the locally maintained address information of the NF #2. Correspondingly, the NF #2 receives the service invocation request message #3 from the GW.

S610: The NF #2 sends a service invocation response message #2 to the GW. Correspondingly, the GW receives the service invocation response message #2 from the NF #2.

S611: The GW sends a service invocation response message #2 to the NF #1. Correspondingly, the NF #1 receives the service invocation response message #2 from the GW.

S612: The NF #1 sends a service invocation response message #1 to the service control function. Correspondingly, the service control function receives the service invocation response message #1 from the NF #1.

For content of the configuration information, the service invocation request message #1, the service invocation request message #2, the service invocation request message #3, the service invocation response message #1, the service invocation response message #2, and the service invocation request message #3 in steps S605 to S612, explanations thereof, and specific implementations, refer to the related descriptions of the manner 2 of step S240 in the method 200.

In the solution shown in FIG. 6, the service control function may dynamically initiate or select a network service based on a trigger mechanism, and the GW is enhanced to maintain the address information and addressing logic of the NF #2, so that different network functions respectively invoke corresponding network services, and the service control function performs lifecycle management on the network services, thereby improving network resource utilization, reducing network operation and maintenance costs, and implementing flexible and lightweight network deployment and management.

FIG. 7 is a schematic flowchart of a communication method 700 according to an embodiment of this application. As shown in FIG. 7, an example in which a first network element is a service management function, a second network element is a gateway GW, and a third network element is a service control function is used for description. In this implementation, an example in which information related to a first service changes in a process in which the service control function executes the first service is described. The method includes the following plurality of steps. It should be understood that the method 700 shown in FIG. 7 may be considered as a specific implementation of the method shown in FIG. 2. The related descriptions in the embodiment shown in FIG. 2 are also applicable to this implementation. There may be a same or similar technical means between FIG. 7 and FIG. 2 to FIG. 6. Content described in the embodiments shown in FIG. 2 to FIG. 6 is not described in FIG. 7.

S701: The service control function obtains an execution method for the first service.

S702: The service control function initiates a network service #1 and a network service #2, and starts to execute the first service.

S703: Determine that the information related to the first service changes.

S704: The service control function sends an update message #1 to an NF #1 and an NF #2, to indicate to change or release information about the network service.

S705: The service control function sends an update message #2 to the GW, to indicate to update or delete NF information.

S706: The service control function sends an update message #3 to the service management function, to indicate to update context information of the first service.

For content of the update message #1, the update message #2, and the update message #3 in steps S701 to S706, explanations thereof, and specific implementations, refer to the related descriptions of steps S226 and S227 in the method 200.

In the solution shown in FIG. 7, when executing the first service, the service control function may indicate, in a timely manner, the NF, the service management function, or the GW to update the information related to the first service, to provide service-oriented network service lifecycle management, so as to ensure user service experience.

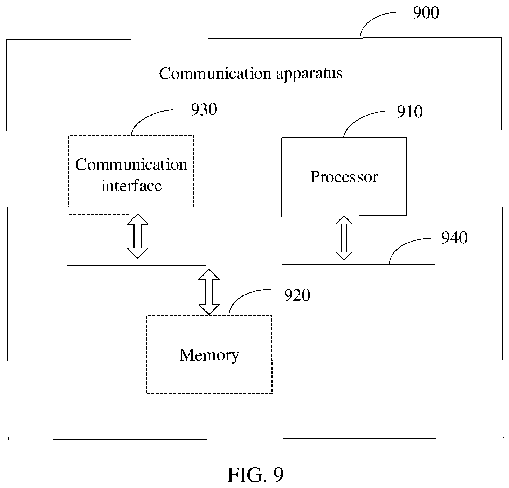

The foregoing describes in detail embodiments on a communication method side of this application with reference to FIG. 1 to FIG. 7. The following describes in detail embodiments on a communication apparatus side of this application with reference to FIG. 8 and FIG. 9. It should be understood that descriptions of the apparatus embodiments correspond to the descriptions of the method embodiments. Therefore, for a part that is not described in detail, refer to the foregoing method embodiments.

FIG. 8 is a diagram of a communication apparatus 800 according to an embodiment of this application. As shown in FIG. 8, the communication apparatus 800 includes a processing module 801 and a communication module 802. The communication apparatus 800 may be a first network element (for example, a service management function), or may be a communication apparatus, for example, a chip, a chip system, or a circuit, that is used in a first network element or that matches a first network element and that can implement a method performed by the first network element. Alternatively, the communication apparatus 800 may be a second network element (for example, a gateway), or may be a communication apparatus, for example, a chip, a chip system, or a circuit, that is used in a second network element or that matches a second network element and that can implement a method performed by the second network element. Alternatively, the communication apparatus 800 may be a third network element (for example, a service control function), or may be a communication apparatus, for example, a chip, a chip system, or a circuit, that is used in a third network element or that matches a third network element and that can implement a method performed by the third network element. Alternatively, the communication apparatus 800 may be a service requester (for example, UE/AF/NF), or may be a communication apparatus, for example, a chip, a chip system, or a circuit, that is used in a service requester or that matches a service requester and that can implement a method performed by the service requester.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation of the first network element, the second network element, the third network element, or the service requester in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used in the first network element, the processing module 801 may be configured to implement a processing function of the first network element in the foregoing embodiments, and the communication module 802 may be configured to implement receiving and sending functions of the first network element in the foregoing embodiments.

When the communication apparatus 800 is used in the second network element, the processing module 801 may be configured to implement a processing function of the second network element in the foregoing embodiments, and the communication module 802 may be configured to implement receiving and sending functions of the second network element in the foregoing embodiments.

When the communication apparatus 800 is used in the third network element, the processing module 801 may be configured to implement a processing function of the third network element in the foregoing embodiments, and the communication module 802 may be configured to implement receiving and sending functions of the third network element in the foregoing embodiments.

When the communication apparatus 800 is used in the service requester, the processing module 801 may be configured to implement a processing function of the service requester in the foregoing embodiments, and the communication module 802 may be configured to implement receiving and sending functions of the service requester in the foregoing embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 9 is a diagram of another communication apparatus 900 according to an embodiment of this application. As shown in FIG. 9, optionally, the communication apparatus 900 may be a chip or a chip system. Optionally, the chip system in this application may include a chip, or may include a chip and another discrete device.

The communication apparatus 900 may be configured to implement a function of any network element (for example, the first network element, the second network element, the third network element, or the service requester) in the communication system described in the foregoing examples. The communication apparatus 900 may include at least one processor 910. Optionally, the processor 910 is coupled to a memory. The memory may be located in the apparatus. Alternatively, the memory may be integrated with the processor. Alternatively, the memory may be located outside the apparatus. For example, the communication apparatus 900 may further include at least one memory 920. The memory 920 stores a necessary computer program, a computer program or instructions, and/or data for implementing any one of the foregoing examples. The processor 910 may execute the computer program stored in the memory 920, to complete the method in any one of the foregoing examples.

The communication apparatus 900 may further include a communication interface 930. The communication apparatus 900 may exchange information with another device through the communication interface 930. For example, the communication interface 930 may be a transceiver, a circuit, a bus, a module, a pin, or another type of communication interface. When the communication apparatus 900 is a chip-type apparatus or circuit, the communication interface 930 in the apparatus 900 may alternatively be an input/output circuit, and may input information (or referred to as receiving information) and output information (or referred to as sending information). The processor 910 is an integrated processor, a microprocessor, an integrated circuit, a logic circuit, or the like. The processor may determine output information based on input information.

The coupling in this application is an indirect coupling or a communication connection between apparatuses, units, or modules, may be in an electrical form, a mechanical form, or another form, and is used for information exchange between the apparatuses, the units, or the modules. The processor 910 may operate cooperatively with the memory 920 and the communication interface 930. A specific connection medium between the processor 910, the memory 920, and the communication interface 930 is not limited in this application.

Optionally, as shown in FIG. 9, the processor 910, the memory 920, and the communication interface 930 are connected to each other through a bus 940. Optionally, the bus may include a type of bus such as an address bus, a data bus, or a control bus. In addition, for ease of representation, FIG. 9 shows one bus 940, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes the following plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should be further noted that the memory described in this specification is intended to include but is not limited to these memories and any other appropriate type of memory.

An embodiment of this application further provides a computer-readable storage medium. The computer-readable storage medium stores computer instructions used to implement the method performed by the first network element, the second network element, the third network element, or the service requester in the foregoing method embodiments.

An embodiment of this application further provides a computer program product, including instructions. When the instructions are executed by a computer, the method performed by the first network element, the second network element, the third network element, or the service requester in the foregoing method embodiments is implemented.

An embodiment of this application further provides a communication system. The communication system includes the first network element, the second network element, and the third network element in the foregoing embodiments. Optionally, the communication system further includes a service requester.

For explanations and beneficial effects of related content of any one of the apparatuses provided above, refer to the corresponding method embodiments provided above. Details are not described herein.

For ease of understanding of embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects. "At least one of the following" or a similar expression thereof indicates any combination of these items, including a single item or any combination of a plurality of items. For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application. For example, numbers are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case but are not intended to limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. This application does not limit, for example, a sending method.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefined" may include being defined in advance, for example, protocol definition. "Preconfigured" may be implemented by pre-storing corresponding code or a corresponding table in a device, or may be implemented in another manner that may indicate relevant information. A specific implementation thereof is not limited in this application.

(7) In this application, "communication" may also be described as "data transmission", "information transmission", "data processing", or the like. "Transmission" includes "sending" and "receiving".

Sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps in the methods in embodiments of this application. The storage medium includes any medium that can store program code, for example, a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining an execution method for a first service, wherein the execution method comprises a network service to be invoked for executing the first service and invocation logic for the network service; and
sending the execution method to a third network element, wherein the third network element supports the first service.

2. The method according to claim 1, wherein before sending the execution method to the third network element, the method further comprises:
receiving a first query message from the third network element, wherein the first query message is used to obtain the execution method for the first service, and the first query message comprises an identifier of the first service.

3. The method according to claim 1 or 2, wherein the method further comprises:
sending configuration information to a second network element, wherein the configuration information comprises the identifier of the first service, and the configuration information indicates a trigger condition for executing the first service.

4. The method according to any one of claims 1 to 3, wherein the method further comprises:
receiving a registration request message, wherein the registration request message is used to request to register the first service; and
sending a registration response message, wherein the registration response message indicates a registration result of the first service.

5. The method according to claim 4, wherein the registration request message further comprises information about the third network element, and the method further comprises:
storing a correspondence between the information about the third network element and the first service.

6. The method according to any one of claims 1 to 5, wherein the method further comprises:
receiving a second query message from the second network element, wherein the second query message is used to obtain the information about the third network element, and the second query message comprises the identifier of the first service; and
sending the information about the third network element to the second network element based on the stored correspondence between the information about the third network element and the first service.

7. The method according to any one of claims 1 to 6, wherein the method further comprises:
receiving a notification message from the third network element, wherein the notification message comprises the identifier of the first service, and the notification message is used to generate context information of the first service; and
generating the context information of the first service; or
receiving context information of the first service from the third network element.

8. A communication method, comprising:
receiving a first service request message, wherein the first service request message is used to request to execute a first service, and the first service request message comprises an identifier of the first service; and
sending a second service request message to a third network element, wherein the second service request message is used to request to execute the first service, and the third network element supports the first service.

9. The method according to claim 8, wherein the method further comprises:
receiving configuration information from a first network element, wherein the configuration information indicates a trigger condition of the first service, the configuration information comprises the identifier of the first service, and the first network element supports management of the first service; and
sending the second service request message to the third network element comprises:
sending the second service request message to the third network element when the trigger condition of the first service is met.

10. The method according to claim 8 or 9, wherein before sending the second service request message to the third network element, the method further comprises:
sending a query message to the first network element, wherein the query message is used to obtain information about the third network element, the query message comprises the identifier of the first service, and the first network element supports management of the first service; and
receiving the information about the third network element from the first network element.

11. The method according to any one of claims 8 to 10, wherein a network service to be invoked for executing the first service comprises a first network service and a second network service, and the method further comprises:
receiving a first service invocation request message from a first network function, wherein the first service invocation request message is used to request to invoke the second network service, the first network function supports invocation of the first network service, and the service invocation request message comprises an identifier of a second network function that supports invocation of the second network service;
sending a second service invocation request message to the second network function based on stored address information of the second network function, wherein the second service invocation request message is used to invoke the second network service;
receiving a third execution result from the second network function; and
sending the third execution result to the first network function.

12. The method according to claim 11, wherein before sending the second service invocation request message to the second network function, the method further comprises:
receiving configuration information from the third network element, wherein the configuration information comprises the address information of the second network function; and
storing the address information of the second network function.

13. The method according to any one of claims 8 to 12, wherein the method further comprises:
receiving an update message, wherein the update message is used to update information related to the first service.

14. The method according to claim 13, wherein the network service to be invoked for executing the first service comprises the first network service and the second network service, and the information related to the first service comprises one or more of the following:
information about the first network service and/or information about the second network service;
context information of the first service; or
policy information and/or subscription information associated with the first service.

15. A communication method, comprising:
receiving a service request message, wherein the service request message is used to request to execute a first service, and the service request message comprises an identifier of the first service;
obtaining an execution method for the first service, wherein the execution method comprises a network service to be invoked for executing the first service and invocation logic for the network service; and
executing the first service based on the execution method for the first service.

16. The method according to claim 15, wherein obtaining the execution method for the first service comprises:
sending a query message to a first network element, wherein the query message is used to obtain the execution method for the first service, the query message comprises the identifier of the first service, and the first network element supports management of the first service; and
receiving the execution method for the first service from the first network element.

17. The method according to claim 15 or 16, wherein the method further comprises:
sending a notification message to the first network element, wherein the notification message comprises the identifier of the first service, and the notification message is used to generate context information of the first service; or
generating context information of the first service; and
sending the context information of the first service to the first network element, wherein the first network element supports management of the first service.

18. The method according to any one of claims 15 to 17, wherein before receiving the service request message, the method further comprises:
receiving a first registration request message, wherein the first registration request message is used to request to register the first service;
sending a second registration request message to the first network element, wherein the second registration request message is used to request to register the first service, and the first network element supports management of the first service;
receiving a second registration response message from the first network element, wherein the second registration response message indicates a registration result of the first service; and
sending a first registration response message, wherein the first registration response message indicates the registration result.

19. The method according to any one of claims 15 to 18, wherein the network service to be invoked for executing the first service comprises a first network service and a second network service, and executing the first service based on the execution method for the first service comprises:
sending a service invocation request message to a first network function based on the execution method for the first service, wherein the service invocation request message is used to request the first network function to invoke the first network service;
sending first configuration information to the first network function, wherein the first configuration information comprises address information of a second network function, and the address information of the second network function is used by the first network function to determine a second network function that supports invocation of the second network service; and
receiving a first execution result from the first network function.

20. The method according to any one of claims 15 to 18, wherein the network service to be invoked for executing the first service comprises a first network service and a second network service, and executing the first service based on the execution method for the first service comprises:
sending a service invocation request message to a first network function based on the execution method for the first service, wherein the service invocation request message is used to request the first network function to invoke the first network service;
sending second configuration information to a second network element, wherein the second configuration information comprises address information of a second network function, the address information of the second network function is used to determine a second network function that supports invocation of the second network service, and the second network element is configured to store address information of one or more network functions; and
receiving a second execution result from the first network function.

21. The method according to any one of claims 15 to 20, wherein the method further comprises:
sending an update message when information related to the first service changes, wherein the update message is used to update the information related to the first service.

22. The method according to claim 21, wherein the network service to be invoked for executing the first service comprises the first network service and the second network service, and the information related to the first service comprises one or more of the following:
information about the first network service and/or information about the second network service;
the context information of the first service; or
policy information and/or subscription information associated with the first service.

23. A communication method, comprising:
sending a service request message to a second network element, wherein the service request message is used to request to execute a first service, and the service request message comprises an identifier of the first service; and
receiving a service response message from the second network element, wherein the service response message indicates an execution result of the first service.

24. The method according to claim 23, wherein before sending the service request message to the second network element, the method further comprises:
obtaining identification information of the first service.

25. The method according to claim 24, wherein obtaining the identification information of the first service comprises:
obtaining the identification information of the first service from a first network element; or
obtaining the identification information of the first service from an application function, wherein the identification information of the first service is generated by the application function or a first network element, and the first network element supports management of the first service.

26. A communication apparatus, comprising one or more functional modules, wherein the one or more functional modules are configured to perform the method according to any one of claims 1 to 7, the one or more functional modules are configured to perform the method according to any one of claims 8 to 14, the one or more functional modules are configured to perform the method according to any one of claims 15 to 22, or the one or more functional modules are configured to perform the method according to any one of claims 23 to 25.

27. A communication apparatus, comprising a processor, wherein the processor is coupled to a memory, and the processor is configured to execute a computer program stored in the memory, to enable the apparatus to perform the method according to any one of claims 1 to 7, to enable the apparatus to perform the method according to any one of claims 8 to 14, to enable the apparatus to perform the method according to any one of claims 15 to 22, or to enable the apparatus to perform the method according to any one of claims 23 to 25.

28. A communication system, comprising a first network element, a second network element, and a third network element, wherein the first network element is configured to perform the method according to any one of claims 1 to 7, the second network element is configured to perform the method according to any one of claims 8 to 14, and the third network element is configured to perform the method according to any one of claims 15 to 22.

29. The communication system according to claim 28, further comprising a service requester, wherein the service requester is configured to perform the method according to any one of claims 23 to 25.

30. A computer-readable storage medium, wherein the computer-readable storage medium stores a computer program, and when the computer program is run on a computer, the computer is enabled to perform the method according to any one of claims 1 to 7, the computer is enabled to perform the method according to any one of claims 8 to 14, the computer is enabled to perform the method according to any one of claims 15 to 22, or the computer is enabled to perform the method according to any one of claims 23 to 25.

31. A computer program product, wherein when the computer program product is executed on a computer, the computer is enabled to perform the method according to any one of claims 1 to 7, the computer is enabled to perform the method according to any one of claims 8 to 14, the computer is enabled to perform the method according to any one of claims 15 to 22, or the computer is enabled to perform the method according to any one of claims 23 to 25.
